# EUROPEAN PATENT APPLICATION

(11) **EP 2 168 675 A1**
(43) Date of publication of application: **31.03.2010**
(21) Application number: 09171883.3
(22) Date of filing: 30.09.2009
(51) Int. Cl.: B01J 19/00

(54) **Reactor system**

(30) Priority: 30.09.2008 US 242893
(71) Applicant: Symyx Solutions Inc., Sunnyvale CA 94085 (US)
(72) Inventor: Sidhu, Robbie Singh, Sunnyvale, CA 94085 (US); McWaid, Thomas Harding, Sunnyvale, CA 94085 (US); Diamond, Gary M., Sunnyvale, CA 94085 (US); Hall, Keith Anthony, Sunnyvale, CA 94085 (US); Schofer, Susan J., Sunnyvale, CA 94085 (US); Dias, Eric L., Sunnyvale, CA 94085 (US); Boussie, Thomas R., Sunnyvale, CA 94085 (US); Nava-Salgado, Victor O., Sunnyvale, CA 94085 (US); Higashihara, Kenneth, Cupertino, CA 95014 (US)
(74) Representative: Eisenführ, Speiser & Partner

(57) **Abstract**

A reactor system includes a housing and a plurality of reactors at least partially contained in the housing. The reactors each have a containment structure enclosing an internal space in the reactor. The containment structure including a circumferential sidewall having opposite ends and surrounding at least a portion of said internal space. The sidewall has a thermal mass and a sidewall heater adjacent an exterior surface of the sidewall. The ratio of the thermal mass of the sidewall to a volume of the portion of the internal space that is surrounded by the sidewall is relatively low.

## Description

### FIELD OF INVENTION

The present invention relates generally to reactor systems and methods for high throughput screening of materials for desirable characteristics, and in particular to such systems and methods in which the materials are heated and/or cooled by the reactor system.

### BACKGROUND

Research and development programs directed at discovery of materials use high-throughput screening tools to evaluate multiple different candidate materials and/or process conditions to reduce the costs and time associated with the identification of promising candidate materials and/or process conditions. Various high-throughput parallel reactor systems have been developed to evaluate multiple candidate materials and/or process conditions by conducting multiple reactions in parallel (i.e., during the same or overlapping time periods).

Pertinent disclosure of a parallel reactor system suitable for high-throughput experimentation is set forth in U.S. Patent No. 6,306,658 entitled "Parallel Reactor with Internal Sensing" and issued to Symyx Technologies, Inc., the entire contents of which are hereby incorporated by reference. A reactor corresponding to the '658 patent is commercially available from Symyx Technologies, Inc. of Sunnyvale, CA as a Symyx Parallel Pressure Reactor. The Symyx Parallel Pressure Reactor includes a reactor block having a plurality of wells for containing reaction materials for the various reactions. The system also includes temperature, pressure, and other sensors that allow monitoring of the reactions while they are in progress. The reactor block has a high capacity to absorb and retain heat. During the course of many reactions, the reactor block is heated by a temperature control system along with the reaction materials to an elevated temperature. Because the reactor block has a relatively high thermal mass, the reactor block helps the temperature control system maintain the reaction materials at a relatively consistent temperature despite any exotherms or endotherms associated with the reactions being conducted in the wells. This is advantageous because it helps ensure that the reactions are conducted under process conditions that closely correspond to the process conditions specified in the designs of the experiments.

Reactor systems that have relatively high thermal mass reactor blocks have been satisfactory for numerous applications in many different fields of research. It has been recognized in the art that low thermal mass structures facilitate rapid thermal cycling of reaction materials. However, most parallel reactor systems continue to rely on a relatively high thermal mass structure (such as a reactor block) to help control temperature of the reaction materials. The present inventors have discovered improved systems and methods that facilitate high-throughput experimentation in workflows that call for rapid heating and/or cooling of reaction materials.

### SUMMARY

One aspect of the present invention is a reactor system. The reactor system has a housing. A plurality of reactors are at least partially contained in the housing. The reactors each have a containment structure enclosing an internal space in the reactor. The containment structure includes a circumferential sidewall having opposite ends and surrounding at least a portion of said internal space. The sidewall has a thermal mass. A sidewall heater is adjacent an exterior surface of the sidewall. A ratio of the thermal mass of the sidewall to a volume of said portion of the internal space that is surrounded by the sidewall is in the range of about 200 kJ/Km³ to about 3000 kJ/Km³.

Other objects and features will in part be apparent and in part pointed out hereinafter.

### BRIEF DESCRIPTION OF THE DRAWINGS

FIG. 1 is a perspective of one embodiment of a reactor system of the present invention on a robotic workstation;
FIG. 2 is an enlarged perspective of the reactor system without the workstation;
FIG. 3 is a perspective of one of the reactors in the reactor system;
FIG. 4 is a cross section of the reactor illustrated in Fig. 3;
FIG. 5 is an exploded perspective of the reactor illustrated in Figs. 3 and 4;
FIG. 6 is a perspective of a cross section of a sidewall assembly of the reactor illustrated in Figs 3-5;
FIG. 7 is an exploded perspective of a bottom cap assembly of the reactor illustrated in Figs. 3-5;
FIG. 8 is a perspective of a cross section of the bottom cap assembly illustrated in Fig. 7;
FIG. 9 is a perspective of the sidewall assembly illustrated in Fig. 6 showing a channel on the inner surface of the sidewall;
FIG. 10 is a perspective of a reactor head assembly of the reactor illustrated in Figs. 3-5;
FIG. 11 is an exploded perspective of the reactor head assembly illustrated in Fig. 10;
FIG. 12 is an exploded perspective of a valve assembly in the reactor head assembly illustrated in Fig. 11, wherein the valve assembly is inverted compared with its orientation in Fig. 11;
FIG. 13 is an exploded cross section of the valve assembly illustrated in Fig. 12;
FIG. 14 is an exploded perspective of a latching system of the reactor illustrated in Figs. 3-5;
FIG. 15 is a perspective of the reactor system illustrated in Fig. 2 with a portion of the housing removed to show internal features of the reactor system;
FIG. 16 is a perspective of a cross section of one embodiment of a cooling system manifold plate for supplying a cooling fluid to a cooling jacket of the reactors;
FIG. 17 is a perspective of a cross section of one embodiment of plate forming the upper portion of the housing of the reactor system illustrated in Fig. 2, showing some components of a fluid transport system that is operable to deliver one or more fluids to the reactors and vent effluent from the reactors;
FIG. 18 is a side view of the reactor system illustrated in Fig. 2 with some parts removed and other parts in cross section to illustrate internal passages of the cooling system and fluid transport system;
FIG. 19 is a schematic diagram illustrating the reactor system illustrated in Fig. 2 connected to other parts of the workstation;
FIG. 20 is a perspective of one embodiment of a drive system of a magnetic stirring system of the reactor system illustrated in Figs. 2;
FIG. 21 is a perspective similar to Fig. 2, illustrates another embodiment of a reactor system of the present invention;
FIG. 22 is a cross section similar to Fig. 4 of a second embodiment of a reactor suitable for use in the reactor systems of the present invention;
FIG. 23 is a perspective one embodiment of a reactor head assembly of the reactor illustrated in Fig. 22, wherein the reactor head assembly is inverted compared with its orientation in Fig. 22;
FIG. 24 is a cross section similar to Figs. 4 and 22 of a third embodiment of a reactor suitable for use in the reactor systems of the present invention;
FIG. 25 is a cross section similar to Figs. 4, 22, and 24 of a fourth embodiment of a reactor suitable for use in reactor systems of the present invention;
FIGS. 26 and 27 are perspectives of one embodiment of heater suitable for use in the reactors of the present invention, Fig. 26 illustrating the heater in cross section and Fig. 27 illustrating an enlarged portion of the heater;
FIG. 28 is a schematic diagram illustrating the location of various thermocouples used to collect temperature data from a reactor constructed in accord with the present invention;
Fig. 29 is a graph of data collected during heating of a reactor of the present invention;

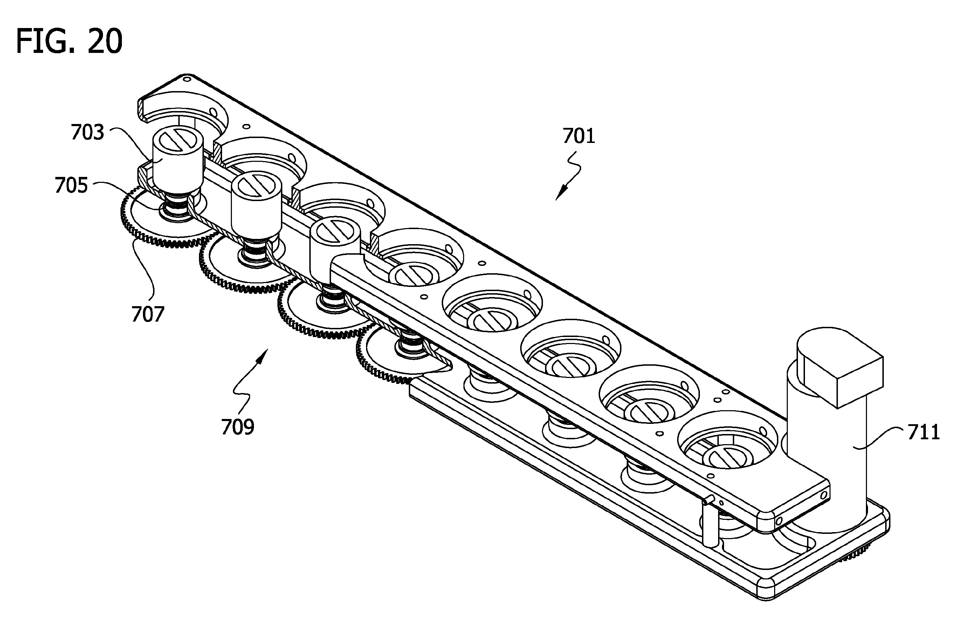

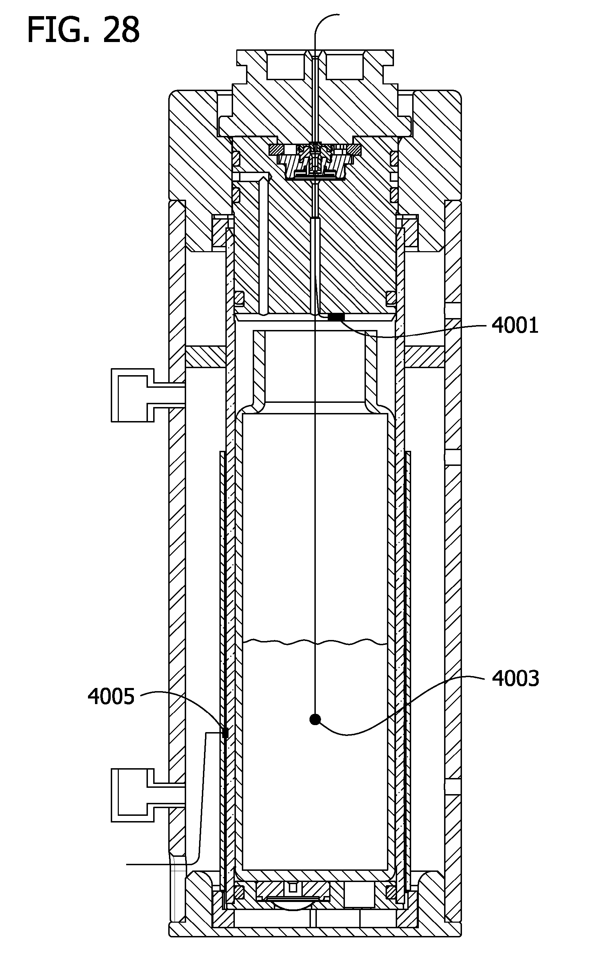

FIGS. 20-31 are graphs of data including temperature measurements taken by the thermocouples illustrated in Fig. 28 during heating of the reactor and heater power and during addition of heat representative of an exothermic reaction to materials in the reactor;

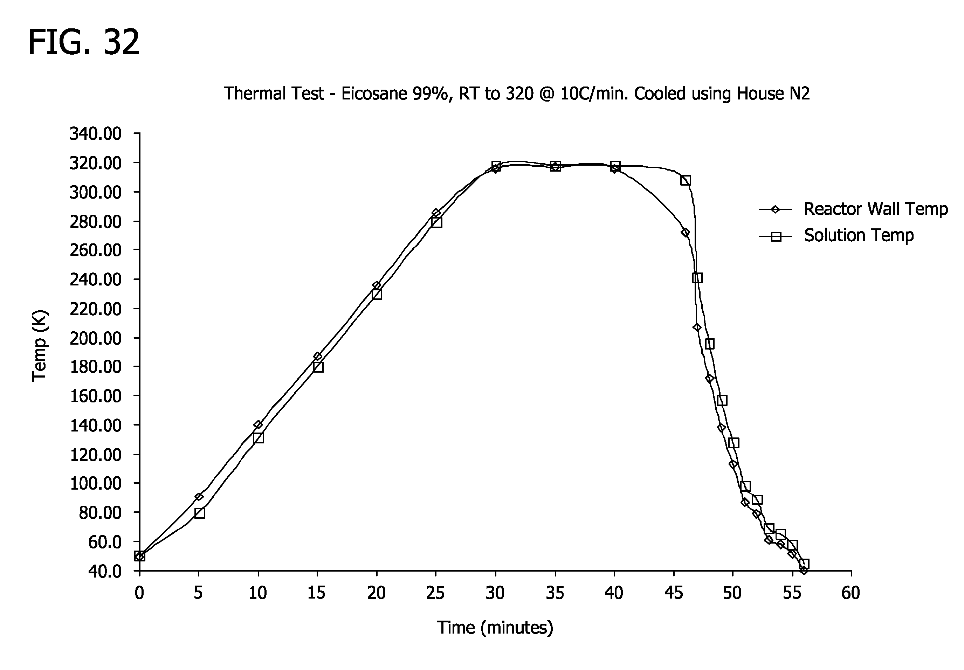

FIG. 32 is a graph illustrating temperature measurements of a reactor sidewall and materials in the reactor during heating and cooling of a reactor constructed for operation at high temperature;

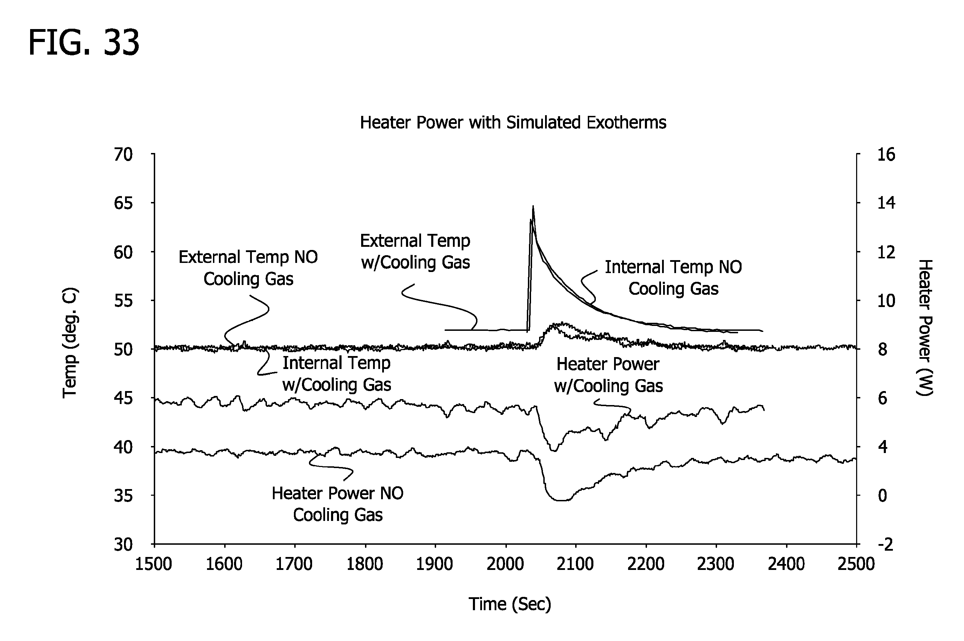

FIG. 33 is a graph illustrating temperature measurements and power consumption by a reactor of the present invention with and without cooling by a cooling system;

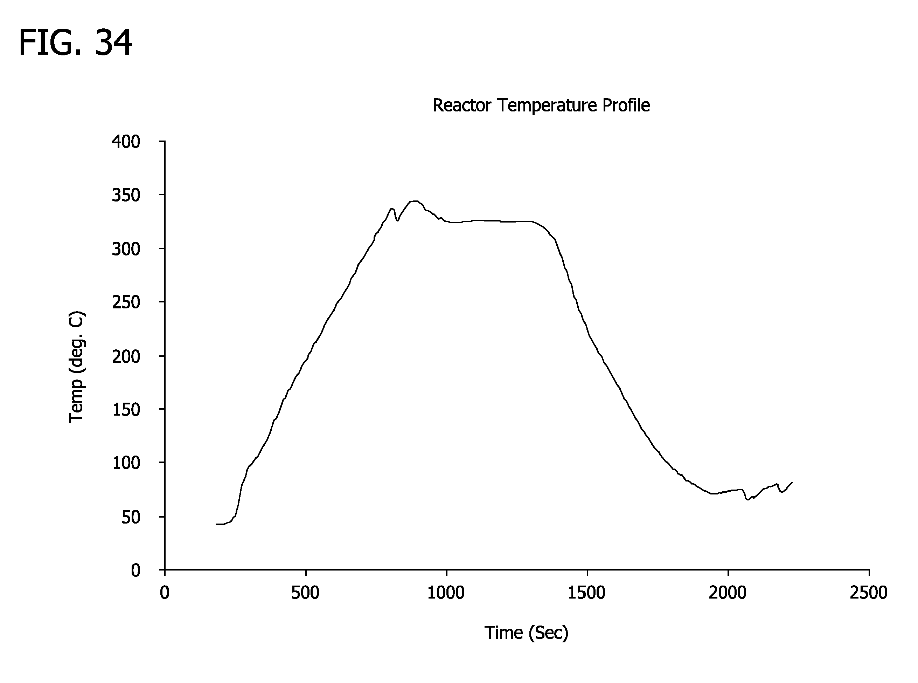

FIG. 34 is a graph illustrating a plot of temperature versus time for a process in which nanoparticles are synthesized in a reactor of the present invention; and

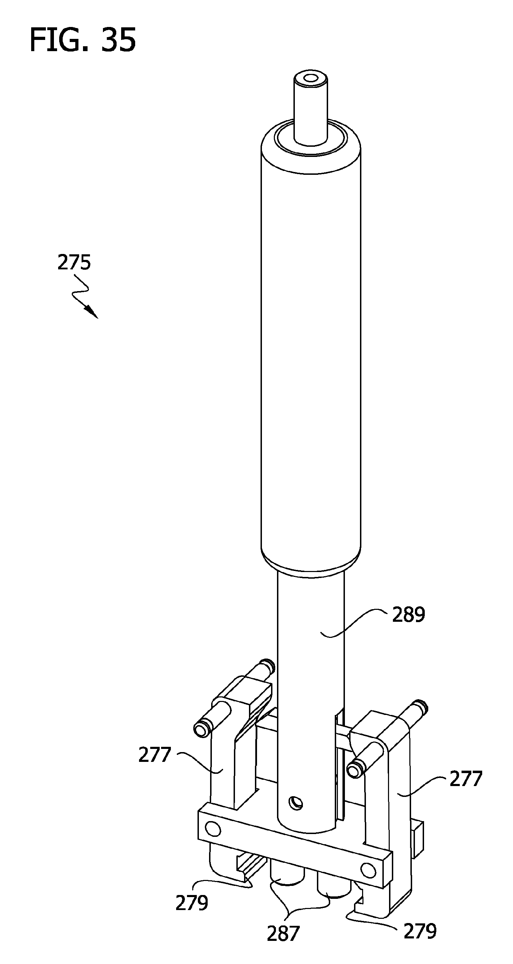

FIG. 35 is a perspective of one embodiment of a tool for unlatching a reactor constructed according to the present invention and removing it from its housing.

Corresponding reference characters indicate corresponding parts throughout the drawings.

### DETAILED DESCRIPTION

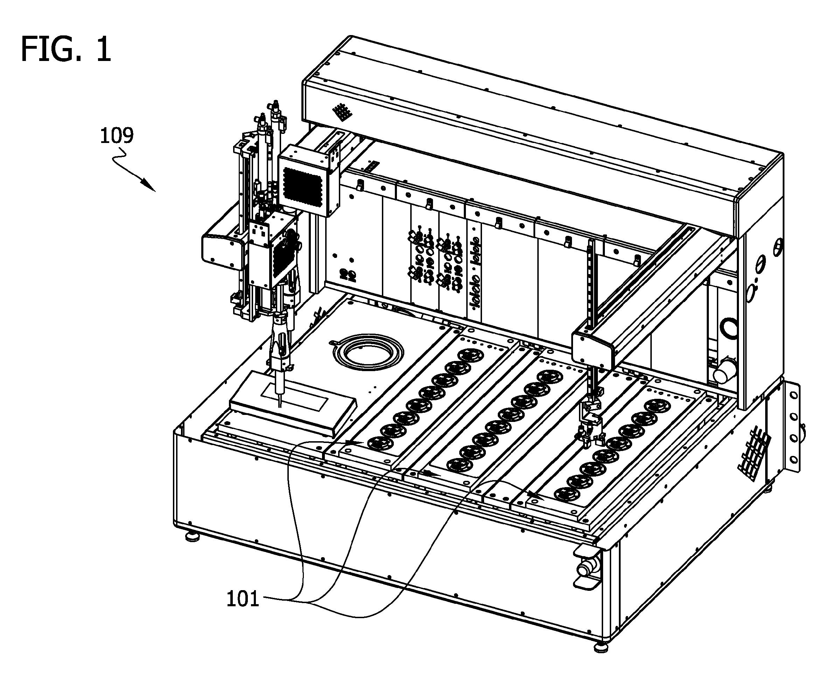

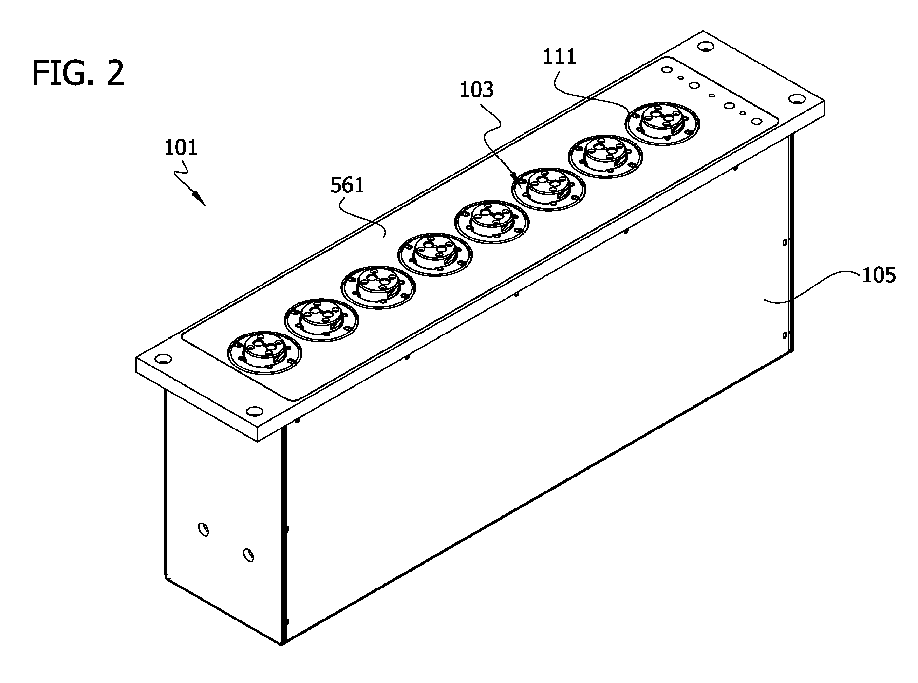

Referring now to the drawings, first to Figs. 1-2 in particular, one embodiment of a reactor system of the present invention is generally designated 101. In this embodiment, the system 101 includes a number of reactor assemblies 102, each of which comprises an array of reactors 103 at least partially contained in a housing 105. As is best illustrated in Fig. 2, the system 101 includes three reactor assemblies 102, each of which has a 1 x 8 array of reactors, but the number of reactor assemblies and the number of rows and/or columns in the array of each assembly can vary within the scope of the invention. For example, the number of reactor assemblies 102 can vary from one to three or more. Further, the reactor array in each reactor assembly 102 does not have to be organized in rows and columns to practice the invention.

The reactors 103 and housing 105 of each reactor assembly 102 are suitably a modular system, e.g., so the housing and reactors can be installed as a module on a robotic workstation 109 (such as a Symyx Core Module from Symyx Technologies, Inc. of Sunnyvale, CA), as illustrated in Fig. 1. Fig. 1 shows three identical reactor assemblies 102 constructed as modules on a robotic workstation 109. In Figs. 1 and 2, the top of the housing 105 has a plurality of openings 111 (e.g., one opening for each reactor) for accessing the reactors 103. The tops of the reactors 103 also protrude through the openings 111 so the reactors are not entirely contained within the housing 105. However, it is understood that the reactors can be completely contained within the housing within the scope of the invention.

The reactors 103 are suitably substantially identical to one another, as is the case in the illustrated embodiment. Thus, a detailed description of one reactor 103 will suffice to describe all the reactors. However, it is understood that the reactors can differ from one another in size, shape and/or construction without departing from the scope of the invention.

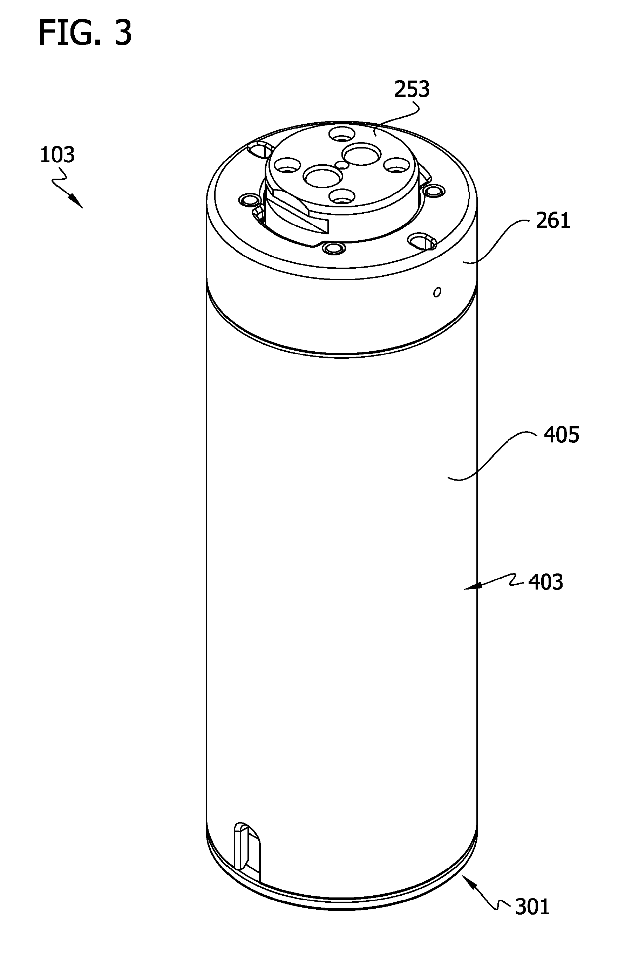

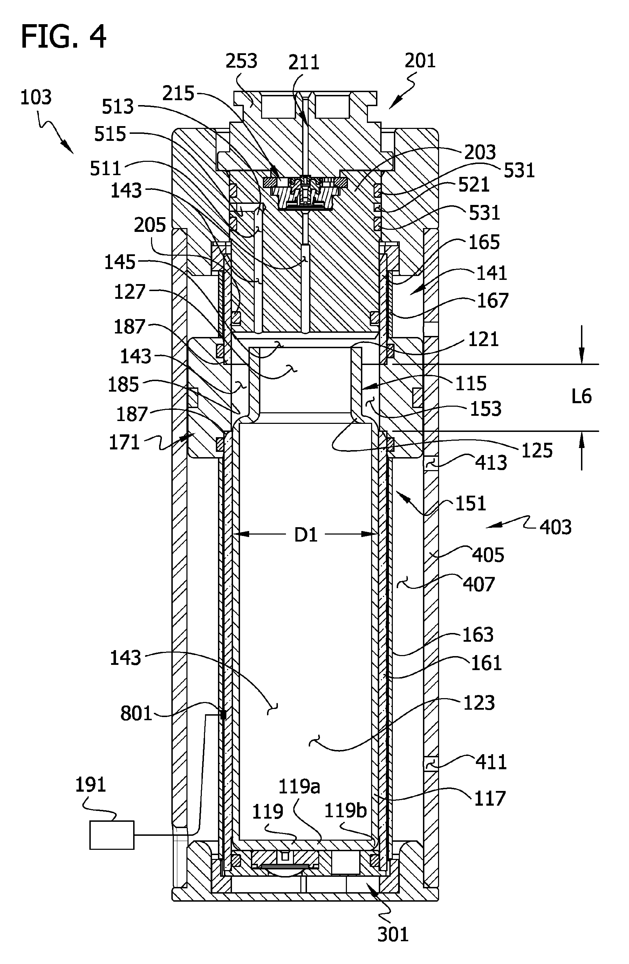

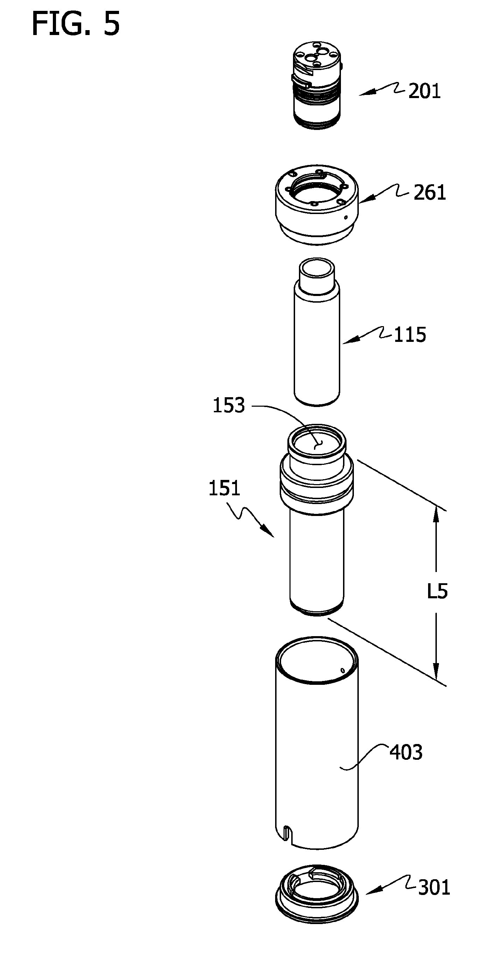

The reactors 103, which are best illustrated in Figs. 3-5, are suitable for containing reaction materials and for conducting various chemical reactions in the reactors. As illustrated in Figs. 4 and 5, the reactors 103 may contain reaction vessels 115 (broadly, liners). The reaction vessels 115 suitably have an elongate circumferential sidewall 117 (e.g., a substantially cylindrical sidewall as illustrated), a closed bottom 119, and an open top 121 for receiving reaction materials in a cavity 123 defined by the sidewall and bottom. In the illustrated embodiment, the bottom 119 of each reaction vessel 115 has a generally flat central portion 119a and an circumferential portion 119b connecting the flat central bottom portion to the sidewall 117. The vessel 115 also has an inwardly extending shoulder 125 at its upper end so the mouth 127 at the top end 121 of the vessel is narrower than the rest of the vessel.

The reaction vessels 115 are suitably constructed of one or more materials that are resistant to chemical interactions with the reaction materials to be contained therein. For example, the reaction vessels 115 can be constructed of glass, aluminum, stainless steel, ceramic, titanium, a nickel-based super alloy (e.g., Hastelloy®) or other similar materials. The reaction vessels 115 can be plated with Teflon, Nickel, or other materials if desired. The reaction vessels 115 can optionally be constructed to be interchangeable with other known reactor systems, such as the reactor system described in commonly owned U.S. Patent No. 6,306,358, for example. For reasons that will become apparent, it is contemplated that it may be desirable in some applications to use very thin liners (such a liner constructed from a metal foil) instead of the reaction vessels 115 that are illustrated in the drawings to minimize the thermal mass of the structures containing the reaction materials. It is understood, however, that the size and shape of the reaction vessels, the material(s) from which they are made, and the wall thickness of the reaction vessels can vary within the scope of the invention.

The reaction vessels 115 are suitably relatively small to facilitate conducting reactions with relatively small quantities of reaction materials. This is desirable for use of the reactor system 101 in various high throughput screening workflows because there can be limited amounts of reaction materials available and/or the reaction materials used in the workflows may be costly. It is also desirable because it allows numerous materials and/or process conditions to be screened in parallel using a relatively small amount of workspace. For example, the cavity 123 defined within each reaction vessel 115 suitably has a total volume in the range of about 500 microliters to about 200 milliliters. Reaction vessels 115 having a relatively small internal cavity 123 as described above are suitable for conducting reactions in which the non-gaseous reaction materials (including any gases dissolved in liquids or other materials in the reaction vessel) have a total volume in the range of about 400 microliters to about 150 milliliters, and more suitably in the range of about 400 microliters to about 40 milliliters, and still more suitably in the range of about 1 milliliter to about 10 milliliters.

Each reactor 103 has a containment structure 141, illustrated in Fig. 4, defining an internal volume 143 sized and shaped for containing one of the reaction vessels 115 and/or the reaction materials. As illustrated in Fig. 4, the internal volume 143 suitably includes a reactor head space 145 above the open top 121 of the reaction vessel 115 or generally at the top of the internal volume if there is no reaction vessel or other liner. The internal volume 143 of the containment structure (including the volume of any fluid passageways in the reactor head communicating with the internal space 143 - if there are any) is suitably in the range of about 500 microliters to about 200 milliliters, and more suitably in the range of about 500 microliters to about 50 milliliters. As will be discussed in greater detail later, the containment structure 141 is suitably operable to maintain the internal volume 143 of the reactor 103 at a pressure different than ambient pressure.

The containment structure 141 includes a sidewall assembly 151 having a central opening 153 extending generally between opposite ends of the sidewall assembly. A reactor head assembly 201 is at one end (e.g., the upper end) of the sidewall assembly 151. A bottom cap assembly 301 seals the opposite end (e.g., the bottom end) of the sidewall assembly 151. Each of these parts of the containment structure 141 will be described in greater detail below.

The central opening 153 in the sidewall assembly 151 is sized and shaped to extend circumferentially around the internal volume 143 of the reactor 103. In the illustrated embodiment, for example, the sidewall assembly 151 has a generally tubular configuration and the central opening 153 is a generally cylindrical opening that is sized and shaped to receive the reaction vessel. When a reaction vessel 115 or other liner is used, the sidewall assembly 151 is suitably sized and shaped to contact the outer surface of the vessel in conformal relation to facilitate heat transfer between the vessel and sidewall assembly.

The sidewall assembly 151 of the illustrated embodiment includes a lower sidewall 161 and a lower sidewall heater 163 positioned to heat the lower sidewall. The sidewall assembly 151 also includes an upper sidewall 165 and an upper sidewall heater 167 positioned to heat the upper sidewall and headspace 145. Further, the sidewall assembly 151 includes a thermal barrier 171 separating the upper sidewall 165 and upper sidewall heater 167 from the lower sidewall 161 and lower sidewall heater 163.

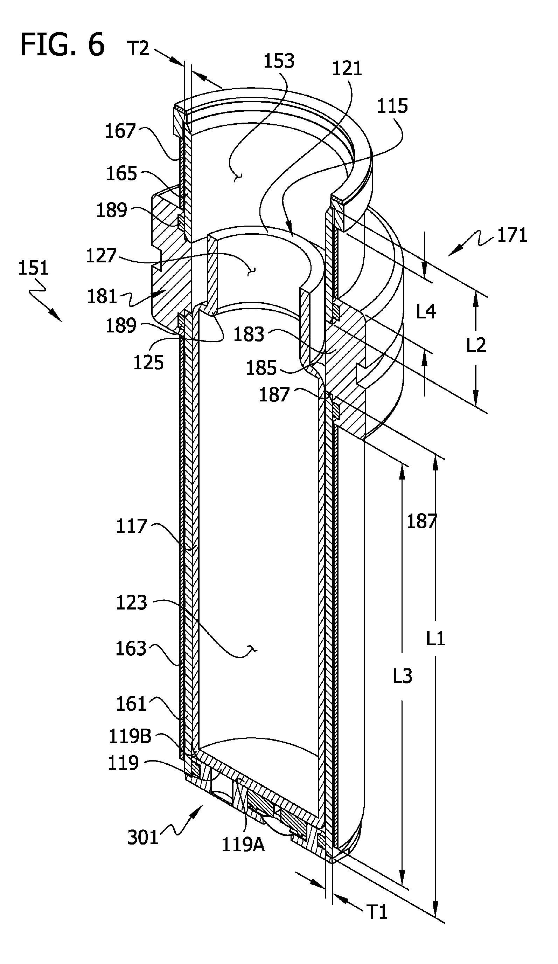

The lower sidewall 161 is sized and shaped for surrounding at least a portion of the reaction vessel sidewall 117. For example, the lower sidewall 161 of the illustrated embodiment is generally tubular and is sized and shaped so it can be arranged to contact at least a portion of the reaction vessel sidewall 117 in conformal relation. Further, the lower sidewall 161 suitably extends substantially continuously and substantially completely around the perimeter of the reaction vessel sidewall 117. The lower sidewall 161 is suitably positioned to surround at least a portion of any non-gaseous reaction materials contained in the reactor 103 (e.g., at the bottom of the reaction vessel). More suitably, the lower sidewall 161 is sized and positioned to extend from about the bottom of the internal volume 143 of the reactor 103 (e.g., about the bottom 119 of the reaction vessel 115) to at least about the upper surface of any non-gaseous reaction materials to be contained in the reaction vessel 115. In the embodiment illustrated in Figs. 4 and 6, the lower sidewall 161 extends from about the bottom 119 of the reaction vessel 115 up to about the relatively narrower mouth 127 at the top of the reaction vessel.

The lower sidewall 161 is suitably longer than the upper sidewall 165. For example, the lower sidewall 161 suitably extends from one end of the sidewall assembly 151 at least about 60 percent of the way to the opposite end of the sidewall assembly. The ratio of the length L1 of the lower sidewall 161 to the length L2 of the upper sidewall 165 is suitably in the range of about 1:1 to about 5:1, and more suitably in the range of about 1.5:1 to about 5:1. The lower sidewall 161 suitably has a length L1 in the range of about 1 cm to about 10 cm. The ratio of the internal diameter D1 of the lower sidewall 161 to the length L1 of the lower sidewall is suitably relatively low, which results in a geometry that can facilitate heat transfer between the lower sidewall and the portion of the internal volume 143 of the reactor 103 surrounded by the lower sidewall. For example, the ratio of the internal diameter D1 of the lower sidewall 161 to the length L1 of the lower sidewall is suitably in the range of about 0.1:1 to about 1:1, more suitably in the range of about of about 0.2:1 to about 1:1, and still more suitably in the range about 0.25:1 to about 1:1.

The lower sidewall 161 is also suitably relatively thin and has a relatively low thermal mass. For example, the lower sidewall 161 suitably has a wall thickness T1 in the range of about 0.1 millimeters to about 5 millimeters. The lower sidewall 161 is suitably about as thin as it can be without reducing its strength below what is needed to withstand the maximum pressure difference it will be exposed to in use. The thinness of the lower sidewall 161 helps minimize the thermal mass of lower sidewall. The lower sidewall 161 can also be constructed of a material (e.g., aluminum) having a relatively low volumetric heat capacity and relatively high thermal conductivity to help minimize its thermal mass and thermal time constant. For higher temperature applications, it may be desirable to use stainless steel, a high temperature superalloy (e.g., Hastelloy), or a similar material that retains structural integrity at higher temperatures better than aluminum even though such materials may have a higher heat capacity and/or a lower thermal conductivity. The thermal mass of the lower sidewall 161 is suitably in the range of about 0.5 J/K to about 50 J/K. The ratio of the thermal mass of the lower sidewall 161 to the volume of the portion of the internal volume 143 of the reactor between the ends of the lower sidewall is suitably in the range of about 200 kJ/Km³ to about 3000 kJ/Km³. The ratio of the thermal mass of the lower sidewall 161 to the total internal volume 143 of the reactor 103 is suitably in the range of about 100 kJ/Km³ to about 1500 kJ/Km³.

The upper sidewall 165 is positioned to extend around at least a portion of the reactor head space 145. For example, the upper sidewall 165 suitably extends axially from slightly below the open top 121 of the reaction vessel 115 to above the top of the reaction vessel. As illustrated in Fig. 4, the upper sidewall 165 suitably surrounds at least a portion of the head assembly 201. The upper sidewall 165 suitably has an orientation that is co-axial with the lower sidewall 161. The upper sidewall 165 suitably has a length L2 in the range of about 1 cm to about 10 cm.

The construction of the upper sidewall 165 can be similar to the construction of the lower sidewall 161. For example, the cross sectional size and shape of the upper sidewall 165 can be substantially similar (if not identical) to the cross sectional size and shape of the lower sidewall 161. The same materials that are suitable for the lower sidewall 161 are also suitable for the upper sidewall 165. Thus, the upper sidewall 165 can be made from the same material as the lower sidewall 161. Like the lower sidewall 161, the upper sidewall 165 suitably has a wall thickness T2 in the range of about 0.1 mm to about 5 mm. It is suitable for the wall thickness T2 of the upper sidewall to be substantially the same as the wall thickness T1 of the lower sidewall 161. However, it is possible that the upper and lower sidewalls 161, 165 differ in cross section size and/or shape, are made from different materials and/or have different wall thicknesses without departing from the scope of the invention.

The thermal mass of the upper sidewall 165 is suitably in the range of about 0.25 J/K to about 25 J/K. The ratio of the thermal mass of the upper sidewall 165 to the portion of the internal volume 143 of the reactor that is between the ends of the upper sidewall is suitably in the range of about 100 kJ/Km³ to about 1500 kJ/Km³. The ratio of the thermal mass of the upper sidewall 165 to the total internal volume 143 of the reactor is suitably in the range of about 50 kJ/Km³ to about 750 kJ/Km³.

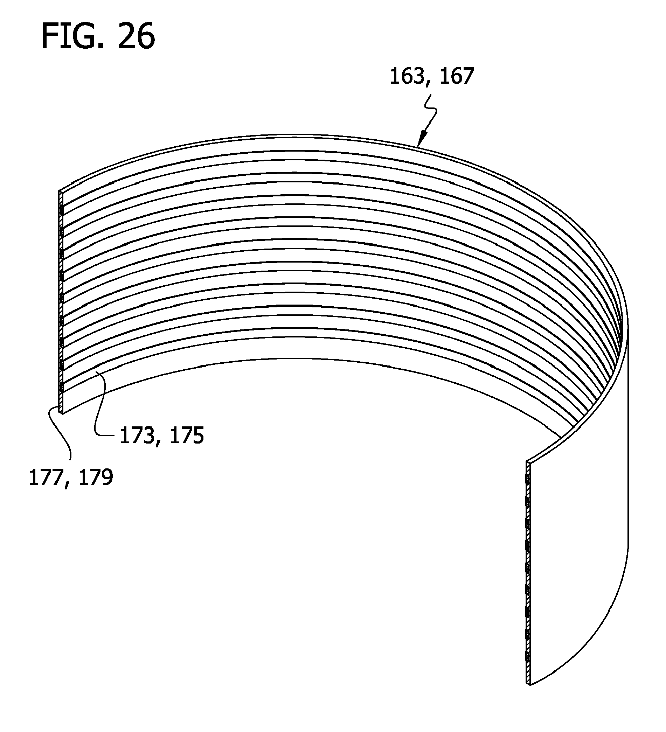

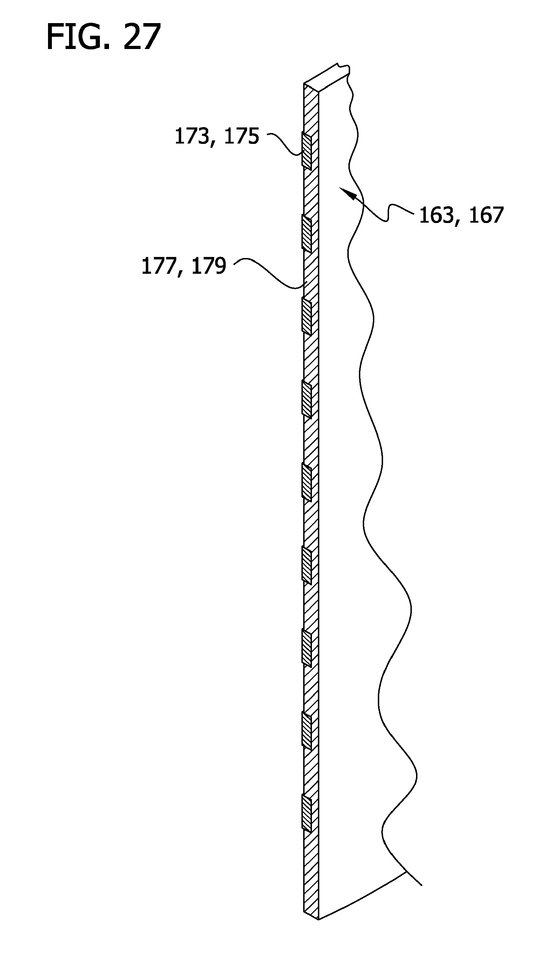

The upper and lower sidewall heaters 163, 167 suitably include one or more resistive heating elements in proximity to the outer surfaces of the upper and lower sidewalls 161, 165, respectively. The sidewall heaters 163, 167 are suitably arranged so heat from the heaters flows into the containment structure 141 from multiple radial directions. As illustrated in Figs. 26 and 27 for example, the upper and lower heaters 163, 167 each include a resistive heating coil 173, 175 extending circumferentially substantially completely around the outer surface of the respective sidewall 161, 165 so heat from the heaters flows into the containment structure 141 from substantially every radial direction. The upper and lower sidewall heaters 163, 167 also include a layer 177, 179 of a polymer capable of withstanding relatively high temperatures (e.g., Kapton®, another polyimide, or similar polymeric material) arranged to support the coils 173, 175. For example, the coils 173, 175 can be embedded in the polymer layers 177, 179. Suitable heaters are commercially available from various commercial suppliers including Watlow and Minco among others. The heaters 163, 167 are suitably in close conformal direct contact with the outer surface of the sidewalls 161, 165 to facilitate transfer of heat between the heaters and sidewalls.

The upper and lower sidewall heaters 163, 167 are suitably independently controllable (e.g., by a processor 191) to allow differential heating within the reactor 103. For example, the upper and lower sidewall heaters 163, 167 allow differential heating of the non-gaseous reaction materials in the reactor 103 (e.g., in the cavity 123 of the reaction vessel 115) and the headspace 145. The sidewall heaters 163, 167 suitably also have a relatively low thermal mass to facilitate cooling of the reactor 103 by a cooling system 401 that will be described in more detail later herein. The heaters 163, 167 for each reactor are also suitably independently controllable from the heaters in the other reactors. This allows the reaction materials and/or headspace 145 of one or more of the reactors 103 to be maintained at different temperatures and/or heated at different temperature ramp rates in comparison to the other reactors.

The lower sidewall heater 163 suitably extends from at least about the bottom 119 of the reaction vessel 115 to at least about the level of any non-gaseous reaction materials to be contained in the reaction vessel. More suitably, the lower sidewall heater 163 extends from at least about the bottom 119 of the reaction vessel 115 to at least about halfway between the bottom of the reaction vessel and the top 121 of the reaction vessel. Still more suitably, the lower sidewall heater 163 extends from at least about the bottom 119 of the reaction vessel 115 to a level on the reaction vessel that is at least about three quarters of the way from the bottom of the reaction vessel to the top 121. In the illustrated embodiment, for example, the lower sidewall heater 163 extends all the way from the bottom 119 of the reaction vessel 115 (e.g., slightly below the bottom of the reaction vessel and slightly above the bottom of the lower sidewall 161) to about the bottom of the relatively narrower mouth 127 at the top of the reaction vessel.

The lower sidewall heater 163 suitably has a length L3 in the range of about 0.25 centimeters to about 10 centimeters, and more suitably in the range of about 0.5 centimeters to about 10 centimeters, and still more suitably in the range of about 1 centimeter to about 10 centimeters. The lower sidewall heater 163 suitably extends from about one end (e.g., the bottom end in the orientation as illustrated) of the sidewall assembly 151 at least part of the way to the opposite end of the sidewall assembly. The lower sidewall heater 163 suitably has a length L3 that is in the range of about 25 percent to about 100 percent of the length L1 of the lower sidewall. The lower sidewall heater 163 illustrated in Fig. 4 is about coextensive with the axial length L1 of the lower sidewall 161.

The lower sidewall heater 163 is suitably a relatively high power heater. For example, the lower sidewall heater 163 suitably has a maximum power output in the range of about 0.06 W/cm² to about 3.8 W/cm², wherein the units of area correspond to the external surface area of the lower sidewall 161 that is between the axial ends of the heater. The total power output of the lower sidewall heater 163 when operating at full power is suitably in the range of about 5W to about 300W. The power output of the lower sidewall heater 163 is suitably substantially uniform along its axial length. However the power output of the heater 163 can vary as function of axial position within the scope of the invention. The lower sidewall heater 163 can rapidly heat the lower sidewall 161 and the portion of the internal volume 143 of the reactor between the opposite ends of the lower sidewall heater (and any reaction materials contained therein) because of the relatively high power of the lower sidewall heater, because the heater is positioned to circumscribe the lower sidewall 161 and transfer heat into the reactor in substantially multiple (e.g., substantially all) radial directions, and because of the thinness and low thermal mass of the lower sidewall. The thermal mass of the lower sidewall heater 163 itself is suitably in the range of about 15 J/K to about 40 J/K.

The upper sidewall heater 167 suitably has an axial length L4 that is in the range of about 25 percent to about 100 percent of the length L2 of the upper sidewall 165. In the illustrated embodiment, for example, the upper sidewall heater 167 is about coextensive in axial length with the upper sidewall 165. The axial length L4 of the upper sidewall heater 167 is suitably no longer than (e.g., shorter than) the axial length L3 of the lower sidewall heater 163. For example, the ratio of the axial length L4 of the upper sidewall heater 167 to the axial length L3 of the lower sidewall heater 163 is suitably in the range of about 0.1:1 to 1:1, and more suitably in the range of about 0.2:1 to 1:1. The axial length L4 of the upper sidewall heater 167 is suitably about 20 to about 50 percent of the length L5 of the sidewall assembly. The length L4 of the upper sidewall heater 167 is suitably in the range of about 0.25 cm to about 10 cm.

The upper sidewall heater 167 suitably has a maximum power output in the range of about 0.06 W/cm² to about 6.8 W/cm², wherein the units of area correspond to the external surface area of the upper sidewall 165 between the axial ends of the upper sidewall heater 167. The total power output of the upper sidewall heater 167 when operating at full power is suitably in the range of about 2W to about 150W. The upper sidewall heater 167 can rapidly heat the upper sidewall 167 and heat the reactor headspace 145 because of the relatively high heater power of the upper sidewall heater, because the heater is positioned to circumscribe the upper sidewall and transfers heat into the reactor in multiple (e.g., substantially all) radial directions, and because of the thinness and low thermal mass of the upper sidewall 165. The thermal mass of the upper sidewall heater 167 is suitably in the range of about 6 J/K to about 20 J/K.

Because the heaters 163, 167 are on the exterior surface of the sidewalls 161, 165 and not in the internal space of the reactors, the heaters are not in direct contact with the reaction materials, which facilitates the ability to heat the reaction materials rapidly without producing high thermal gradients (particularly highly localized thermal gradients) in the reaction materials compared with a similar reactor that has a heater in direct contact with the reaction materials. Further, the heaters 163, 167 do not take up any internal space 143 of the reactor. This can suitably translate to a reduction in the size of the sidewall assembly and a corresponding reduction in the thermal mass of the various parts of the sidewall assembly without reducing the reactor's capacity to hold reaction materials.

The purpose of the thermal barrier 171 is to inhibit conductive heater transfer between the upper and lower sidewalls 161, 165. This improves the ability to maintain and control a temperature difference between the upper portion of the reactor (including at least part of the reactor head space 145) and the lower portion of the reactor (e.g., including any non-gaseous reaction materials the reactor 103). The configuration of the thermal barrier 171 can vary within the scope of the invention. For example, rather than having an upper and lower sidewall in spaced relation to one another, the containment structure can include one continuous sidewall made of a material having a relatively low thermal conductivity (e.g., in the range of about 10 to about 20 W/mK) and the upper and lower sidewall heaters can be spaced from one another on the sidewall such that they are insulated from one another by a portion of the relatively non-conductive sidewall.

The thermal barrier 171 illustrated in Figs. 4-6 includes a spacer 181 between the upper and lower sidewalls 161, 165. The spacer 181 suitably has a generally annular body 183 made of a material having a relatively low coefficient of thermal conductivity (e.g., PEEK, glass, ceramic, polymers, rubber, or other similar materials) to resist the flow of heat between the upper and lower sidewalls 161, 165 through the thermal barrier. For example, the thermal barrier 171 suitably has a heat transfer coefficient in the range of about 0.05 W/m² K to about 0.25 W/m² K. The thermal conductivity of the spacer 181 is suitably lower than the thermal conductivity of the upper and lower sidewalls 161, 165. The body 183 of the thermal spacer has a central opening 185 in which the upper end of the lower sidewall 161 and lower end of the upper sidewall 165 are received. The ends of the upper and lower sidewalls 161, 165 abut inwardly extending shoulders 187 on the spacer 181. The shoulders 187 face in opposite directions and keep the upper and lower sidewalls 161, 165 spaced from one another a distance L6 that is suitably in the range of about 0.1 mm to about 10 mm (e.g., about 0.1 mm to about 5 mm). In the illustrated embodiment, a pair of O-rings 189 (e.g., FEP encapsulated silicone O-rings) are seated in inwardly facing grooves in the thermal spacer 171 and form seals between the spacer 181 and the outer surfaces of the upper and lower sidewalls 161, 165.

The thermal barrier 171 is suitably generally at the same or a similar axial position in the reactor 103 as the mouth 127 of the reaction vessel 115 to facilitate maintaining and controlling a temperature difference between the head space 145 of the reactor and any reaction materials contained in the reaction vessel 115. Although the thermal barrier 171 illustrated in the drawings is a unitary structure, it is contemplated that two or more separate structures can be arranged to be a thermal barrier within the scope of the invention.

Referring to Fig. 4, a temperature sensor 801 (e.g., a thermocouple) is suitably mounted adjacent the exterior surface of the lower sidewall 161 to monitor the temperature of the lower sidewall and the reaction materials contained in the reactor 103. The temperature sensor is suitably mounted on the lower portion of the sidewall 161 so it will be in axial alignment with the reaction materials in the reactor 103 during use. There are suitably no temperature sensors in the internal space 143 of the reactor 103.

The entire sidewall assembly 151, which in the illustrated embodiment includes the upper and lower sidewalls 161, 165, the upper and lower sidewall heaters 163, 167, and the thermal barrier 171, suitably has a relatively low thermal mass. For example, the thermal mass of the sidewall assembly 151 is suitably in the range of about 0.5 J/K to about 55 J/K. The ratio of the thermal mass of the sidewall assembly 151 to the volume of the portion of the internal volume 143 of the reactor that is between the opposite ends of the sidewall assembly is suitably in the range of about 0.15 J/Kcm³ to about 3.5 J/Kcm³. It will be appreciated that this ratio is also relatively low due in large part to the relatively low thermal mass of the sidewall assembly 151.

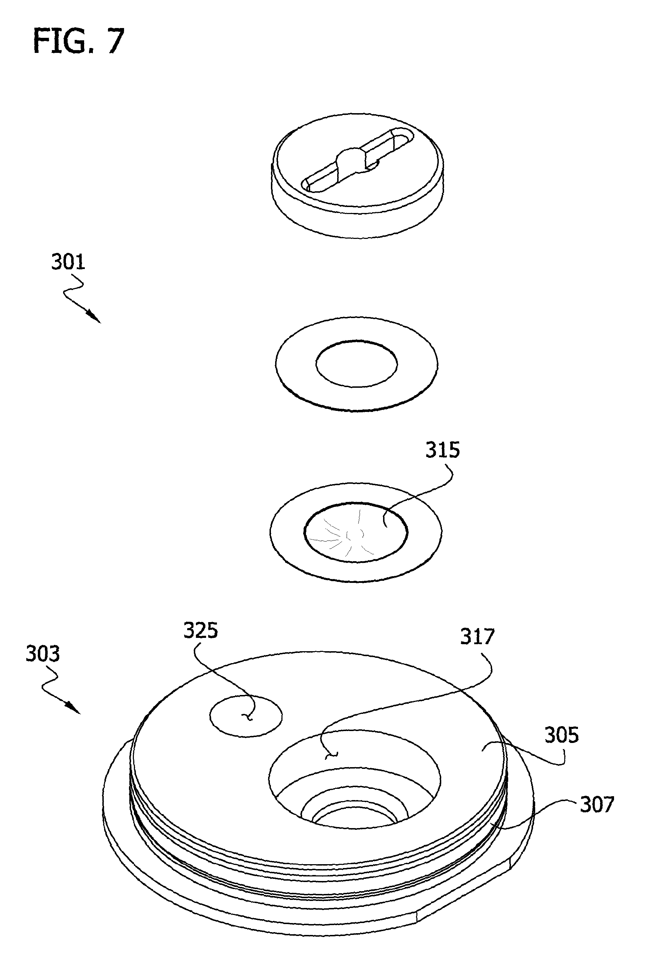

The bottom cap assembly 301 illustrated in Figs. 7-8 includes a bottom cap 303 having a boss 305 that is sized and shaped to fit inside the bottom end of the lower sidewall 161. An O-ring 307 is seated in an outwardly facing channel extending circumferentially around the boss 305 and forms a seal between the bottom cap 303 and the inner surface of the lower sidewall 161. A rupture disk 315 is installed in a pit 317 in the bottom cap 303 oriented to face the bottom 119 of the reaction vessel 115. The rupture disk 315 is used to control how the containment structure 141 will fail if the pressure in the internal volume 143 the containment structure becomes too high.

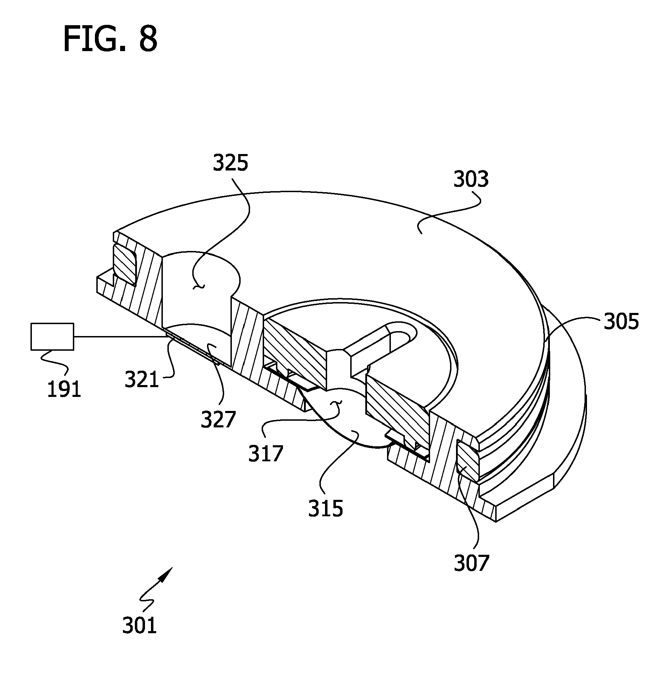

Each reactor 103 desirably includes a pressure sensor operable to monitor pressure in the internal space 143 by monitoring a pressure-induced strain in the containment structure 141. In the illustrated embodiment, for example, the bottom cap assembly 301 includes a pressure sensor 321 operable to detect and monitor the pressure of the internal space 143 inside the containment structure 141. As illustrated in Fig. 8, the pressure sensor 321 is associated with a pit 325 in the bottom cap 303 adjacent the rupture disk pit 317. The pit 325 is oriented to face the bottom 119 of the reaction vessel 115. A relatively thin-walled section 327 of the bottom cap 303 forms the bottom of the pit 325. The pressure sensor 321 is operable to detect changes in a pressure-induced strain in the thin-walled section 327. For example, the pressure sensor 321 is suitably a strain gauge positioned to respond to variations in the amount of strain in the thin-walled section 327 of the bottom cap 303.

As illustrated in Fig. 8, the strain gauge 321 is adhered to the bottom of the bottom cap 303 outside the containment structure 141 and in registration with the pit 325. The strain gauge 321 is in signaling communication with the processor 191, which uses information from the strain gauge to monitor pressure in the containment structure 141.

Because the pressure sensor 321 is outside the internal space 143 of the containment structure 141, any wiring associated with the pressure sensor does not need to extend through the containment structure. Another advantage of using a pressure sensor 321 that is integrated into the containment structure 141 (e.g., on the outer surface of the containment structure) is that this reduces the influence of the pressure sensor on heating and cooling of reaction materials in the reactor compared with prior art pressure sensors that are positioned within the internal space of the reactor. It also reduces cold spots and dead volume in the reactor. Using a pressure sensor 321 to measure strain in the reactor containment structure 141 also helps in scaling down the reactor system 101 down to a size that is conducive for use in high-throughput screening. Similarly, locating the pressure sensor 321 and rupture disk 315 in the bottom cap assembly 301 also helps scale down the reactor system to a size that is suitable for high-throughput screening methods.

The pressure sensor 321 can be inside the containment structure 141 (e.g., adhered to the inner surface of the thin-walled section 327) or elsewhere on the inner or outer surface of the containment structure within the scope of the invention. Although the pit 325 for the strain gauge 321 is positioned at the bottom of the containment structure 141 in the bottom cap assembly 301 in the illustrated embodiment, the pressure sensor could be located elsewhere within the scope of the invention. Suitable strain gauges for monitoring pressure in the containment structure 141 are commercially available from Vishay Micro-Measurements, which has a place of business in Shelton, CT.

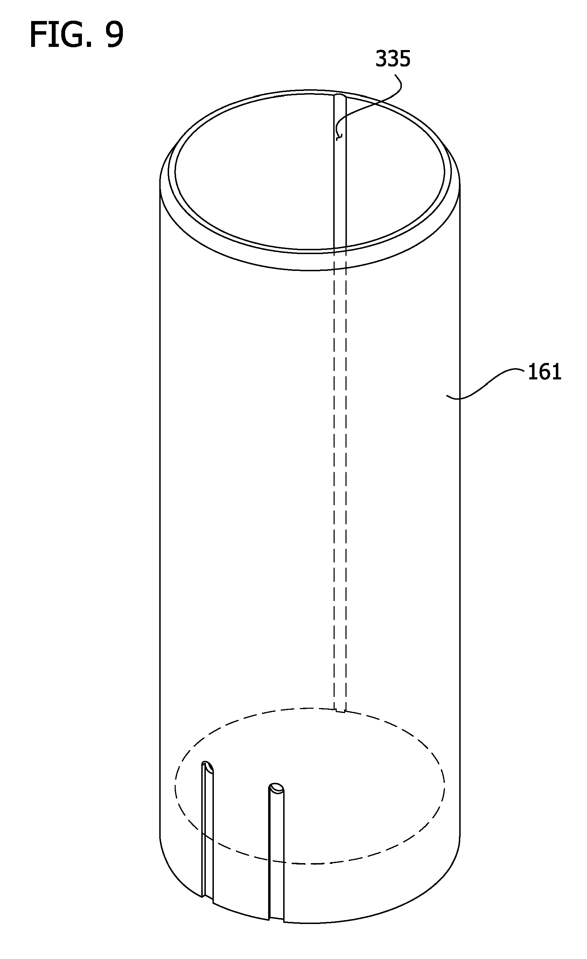

An inward facing channel 335, illustrated in Fig. 9, on the inner surface of the sidewall assembly 151 (e.g., on the inner surface of the lower sidewall 161) extends from the reactor headspace 145 to at least the circumferential portion 119b of the reaction vessel 115 (Fig. 6). The channel 335 ensures that there is a gap between the sidewall assembly 151 and the reaction vessel 115 for gas communication between the headspace 145 and the bottom cap assembly 301 to equalize pressure in the reactor headspace and the pits 317, 325 associated with the rupture disk 317 and pressure sensor 321, respectively. It is possible to omit this channel and rely on seepage of gas between the sidewall assembly 151 and the reaction vessel 115 to equalize pressure in the headspace 145 and in the pits 317, 325 within the scope of the invention. However, the channel 335 allows the reactor 103 to be designed so there is a very tight fit between the outer surface of the reaction vessel 115 and the inner surface of the lower sidewall 161 of the containment structure 141 without worrying that the tight fit would result in a seal that could result in a significant pressure difference between the pressure in the reactor headspace 145 and the pressure in the pits 317, 325 at the bottom of the reaction vessel 115. It can be advantageous to have a tight fit between the reaction vessel 115 and the lower sidewall 161 of the containment structure 141 because this will result in increased contact pressure and thereby facilitate heat transfer between the sidewall assembly 151 (e.g., the lower sidewall) and the reaction vessel.

There is tolerance for a relatively large range of thermal masses for the bottom cap assembly 301 and head assembly 201 (Fig. 5). For example, the thermal mass of the bottom cap assembly 301 and/or head assembly 201 can be increased significantly without substantially changing the heating and cooling capabilities of the reactor 103 by increasing the axial length (height) of the bottom cap assembly or head assembly so they extend farther away from the reaction materials. The influence of thermal mass of the remote portions of the bottom cap assembly 301 and head assembly 201 on heating and cooling of reaction materials is mitigated by the greater distance to the reaction materials. The impact of a relatively large thermal mass in the bottom cap assembly 301 and/or head assembly 201 is also mitigated by the fact that heating and cooling is primarily conducted through the upper and lower sidewalls 161, 165 of the containment structure 141.

The head assembly 201 suitably has a relatively high thermal mass, which can be advantageous for some applications because it results in the head assembly moderating the headspace temperature while the reaction materials are subjected to high heating and cooling temperature ramp rates. For example, the head assembly 201 can have a relatively high thermal mass in the range of 0.5 J/K to about 150 J/K. The ratio of the thermal mass of the head assembly 201 to the thermal mass of the sidewall assembly 151 is suitably in the range of about 1:1 to about 3:1.

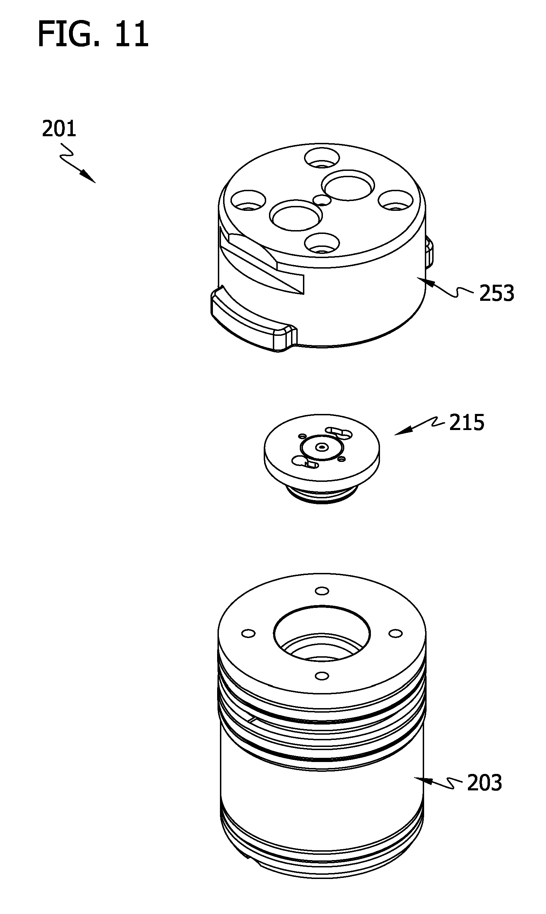

As illustrated in Figs. 4, 10 and 11, the reactor head assembly 201 includes a reactor head 203 sized and shaped so it can be received in the end of the upper sidewall 165. The reactor head 203 can be made of various materials including stainless steel, aluminum, a nickel-based super alloy (e.g., Hastelloy®), or other similar materials. An O-ring 205 (e.g., an FEP encapsulated silicon O-ring or the like) is seated in an outwardly facing channel in the outer surface of the head 203 and forms a seal between the reactor head and the upper sidewall 165. The head assembly 201 also includes one or more conduits 231 and a pair of O-rings 235 (e.g., FEP encapsulated silicon O-rings or the like) associated with a fluid transport system 501 that will be described in greater detail later herein.

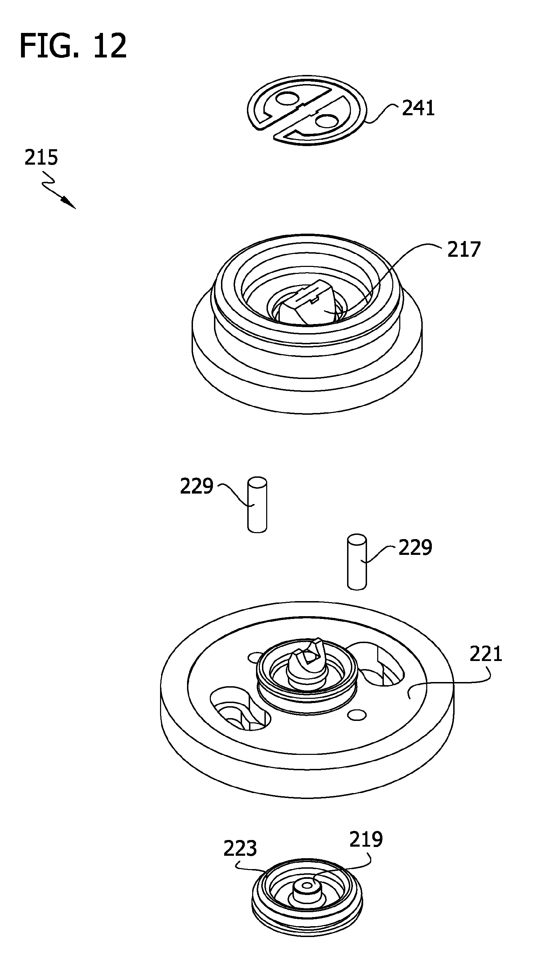

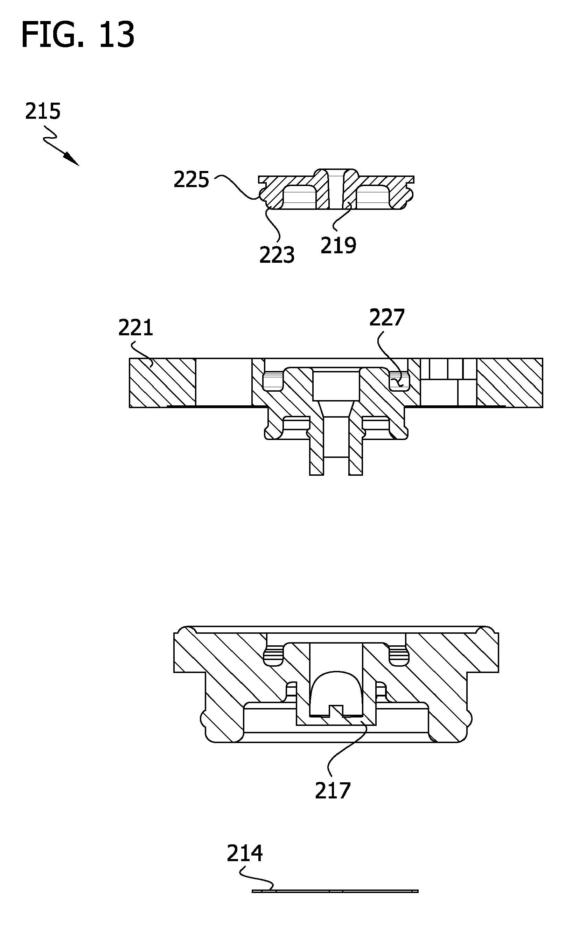

The head assembly 201 has a cannula passage (Fig. 4) 211 extending through the head assembly into the reactor 103 and includes a valve assembly 215 (e.g., comprising a duckbill valve 217 and seal 219 for engaging a cannula substantially as described in U.S. Patent No. 6,759,014, the contents of which are hereby incorporated by reference) that allows a user to insert a cannula through the passage into the reactor to add and/or remove materials from the reactor while the reactor is pressurized to a controlled pressure (including pressures above ambient pressure as well as pressures below ambient pressure). The valve assembly 215 illustrated in Figs. 12 and 13 includes the seal 219, which is operable to engage the outer surface of a cannula (not shown) when it is in the cannula passage 211. The seal 219 is mounted on one side of a backing plate 221 (e.g., by snapping a flange 223 on the seal into a groove 227 on the backing plate). The duckbill valve 217 is mounted on the backing plate 221 opposite the seal 215 (e.g., via pins 229 or other suitable fasteners). A spring clip 241 is positioned to bias the duckbill valve to its closed position.

At least part of the reactor head 203 is suitably positioned between the ends of the upper sidewall heater 167. Thus, the reactor head 203 can readily be heated by the upper sidewall heater 167 and the heated upper sidewall 165. As illustrated in Fig. 4, the bottom of the reactor head 203 is about even with the top of the thermal barrier 171. The bottom of the upper sidewall heater 167 is suitably also about even with the bottom of the reactor head 203 and the top of the thermal barrier 171. The reactor head 203 extends up substantially beyond the upper end of the sidewall assembly 151, and in particular beyond the top of the upper sidewall 165 and upper sidewall heater 167. The valve assembly 215 for the cannula passage 211 is also suitably substantially above the sidewall assembly 151 (e.g., at the top of the head 203) to protect the valve assembly (including the seal 219 and duckbill valve 217) from potentially damaging heat generated by the upper and lower sidewall heaters 163, 167. For instance the valve assembly 215 (e.g., the duckbill valve 217 and seal 219) is suitably in the range of about 0.1 cm to about 5 cm above the top of the upper sidewall heater 167. The relatively high thermal mass of the head assembly 203 also helps protect the valve assembly 215 from the heat. It is contemplated that other types of valves, seals, and valve assemblies can be protected by the head 203 in substantially the same way within the scope of the invention.

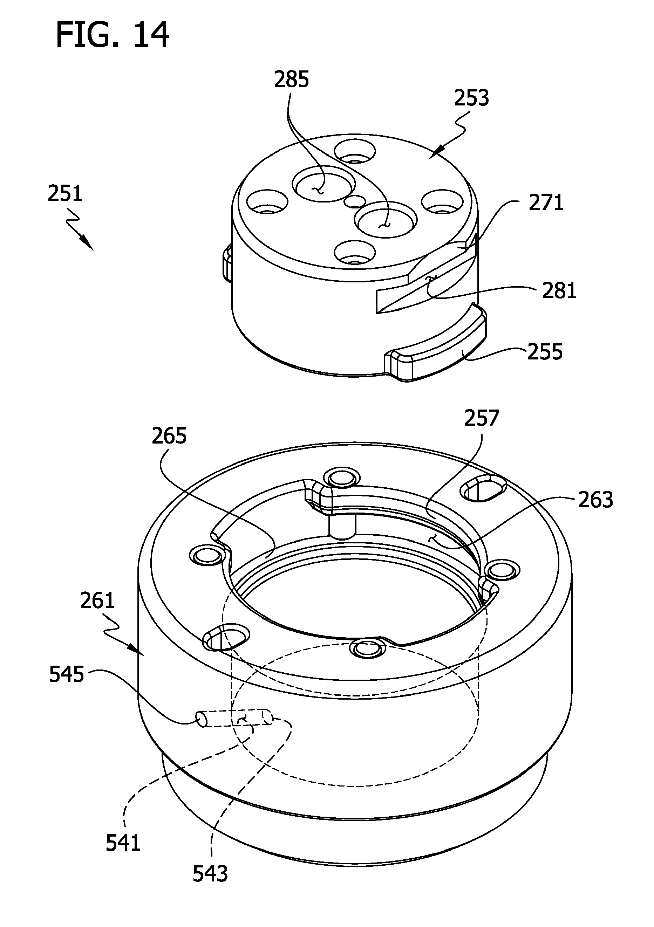

The head assembly 201 suitably includes a latching system 251 (e.g., a bayonet style latch) or other fastening system for releasably holding the reactor head 203 in place. As illustrated in Fig. 14, the latching system 251 includes a retainer 253 mounted on top of the reactor head 203. The retainer 253 has radially outwardly extending lugs 255. The lugs 255 are sized and shaped so they can pass between radially inward extending flanges 257 on a manifold cap 261 that is secured to the reactor housing 105. The retainer 253 is rotated to move the lugs 255 into channels 263 between the radially inward extending flanges 257 and a shoulder 265 on the manifold cap 261 to secure the retainer 253 to the manifold cap. After the retainer 253 has been rotated into the latching position, the retainer can be secured in place with respect to the reactor head 203 via screws (not shown) or other suitable fasteners.

The retainer 253, which in the illustrated embodiment is at the top of the reactor 103, has flats 271 and slots 273 on its sides to facilitate turning the retainer with an unlatching tool 275 (Fig. 35) in order to removed the head 203 from the reactor. In this embodiment, the flats 271 suitably include a pair of flats on opposite sides of the retainer 253 at its top, and the slots 281 include a pair of slots on opposite sides of the retainer beneath the flats. The flats 271 and slots 281 are positioned above the top of the housing 105 to facilitate access of the flats by the tool 275. The tool 275 has a pair of arms 277 having generally L-shaped ends 279 that are selectively moveable (e.g., pivotable) between a first position in which the ends are sufficiently spaced from one another to permit at least the flats 271 on the retainer 253 to pass between the ends 279 of the arms 277 and a second position in the arms can engage the retainer so that the L-shaped ends extend into the slots 281 and releasably secure the tool 275 to the reactor 103.

The retainer 253 also has openings 285 in its upper surface. Each opening 285 is configured to receive one of a plurality of prongs 287 on the tool 275 when the arms 277 of the tool are received in the slots 281. The arms 277 and prongs 287 are secured to a shaft 289 that can be rotated, e.g., by a person grasping a handle (not shown), so the arms and prongs of the tool 275 rotate the retainer 253 to release it from the housing 105 in order to access the interior of the reactor 103 and/or remove the reactor from the housing 105.

It is understood that suitable containment structures may have additional parts and/or may omit some of the parts listed above without departing from the scope of the invention. For example, the thermal barrier can be omitted and a unitary sidewall used instead of the upper and lower sidewalls of the illustrated embodiment. Also, the various parts of the containment structure may have different shapes and may be configured differently than in the illustrated embodiment without departing from the scope of the invention.

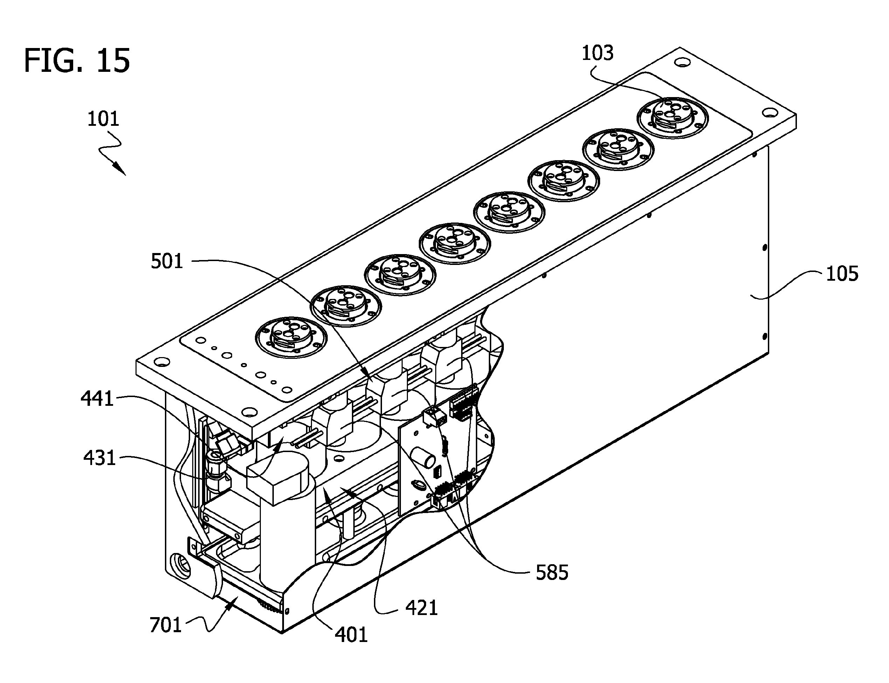

The system also includes a cooling system 401 (Fig. 15) operable to cool the containment structure 141 of each reactor 103 and any reaction materials contained therein. The cooling system 401 is suitably operable to increase the heating load on the heaters 163, 167, and in particular to increase the heating load on the lower sidewall heater 163. The can facilitate detection of changes in enthalpy in the reactors 103 (e.g., associated with an exothermic reaction) that would result in the heater of a prior art rector being shut off completely only partially offset loading of the heater 163, which will still will still be loaded by the cooling system (and therefore still consuming power) The cooling system 401 is also operable to remove heat from a reactor 103 (e.g., heat associated with an exothermic reaction) quickly to facilitate operation of the reactor under substantially isothermal conditions.

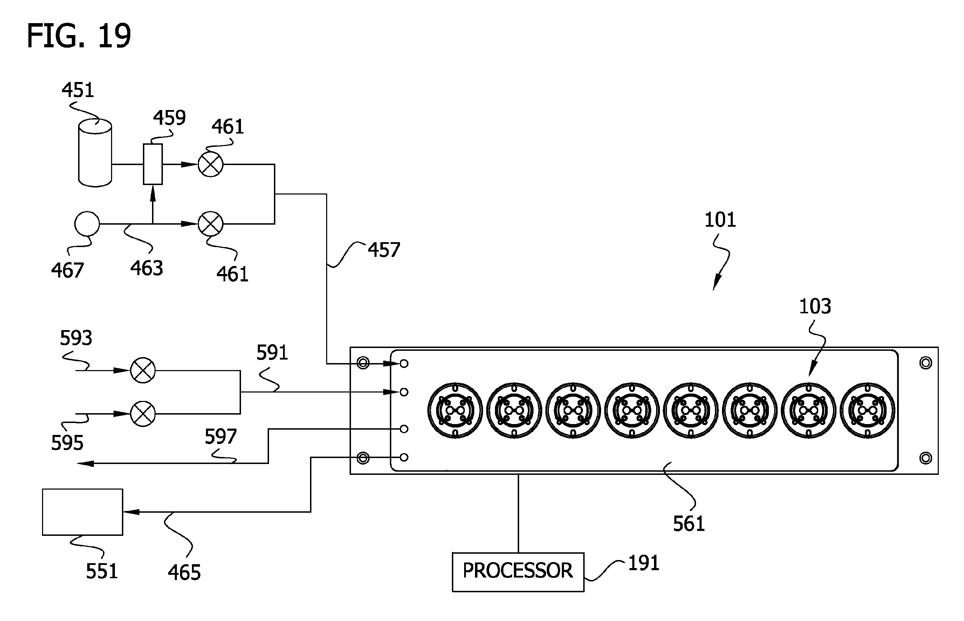

As illustrated in Figs. 3-5, the cooling system 401 includes a cooling jacket 403 at least partially surrounding the containment structure 141 of the reactor is suitably at least partially surrounded by a cooling jacket 403. Each reactor 103 suitably has its own individual cooling jacket 403 to increase thermal isolation of the reactors from one another. However, it is understood that one or more of the reactors may share a common cooling jacket within the scope of the invention. Referring to Fig. 4, the cooling jacket 403 has a substantially cylindrical insulated wall 405 defining a space 407 (e.g., an annular space) between the inner surface of the insulated wall and the lower sidewall heater 163. The space 407 in the cooling jacket 403 suitably extends axially from about the bottom of the internal volume 143 of the reactor 103 to about the thermal barrier 171. The space 407 is suitably configured to facilitate flow of heat out of the lower sidewall 161 and lower sidewall heater 163 in multiple radial directions. For example, the space 407 in the cooling jacket 403 suitably extends substantially all the way around the circumference of the lower sidewall 161 and lower sidewall heater 163, allowing heat to flow from the lower sidewall and lower sidewall heater in substantially all radial directions during cooling. As illustrated in Fig. 4, the cooling jacket has at least one inlet 411 and at least one outlet 413 spaced axially from the inlet so a cooling fluid (e.g., a gas) can be pumped by a pump 467 (Fig. 19) or otherwise flow through the space 407 in the cooling jacket 403 from the inlet (e.g., generally at the bottom of the cooling jacket) to the outlet (e.g., slightly below the thermal barrier). The pump 467 is suitably operable to pump in the range of about 0.15 to about 5 scfm of cooling gas to each reactor 103.

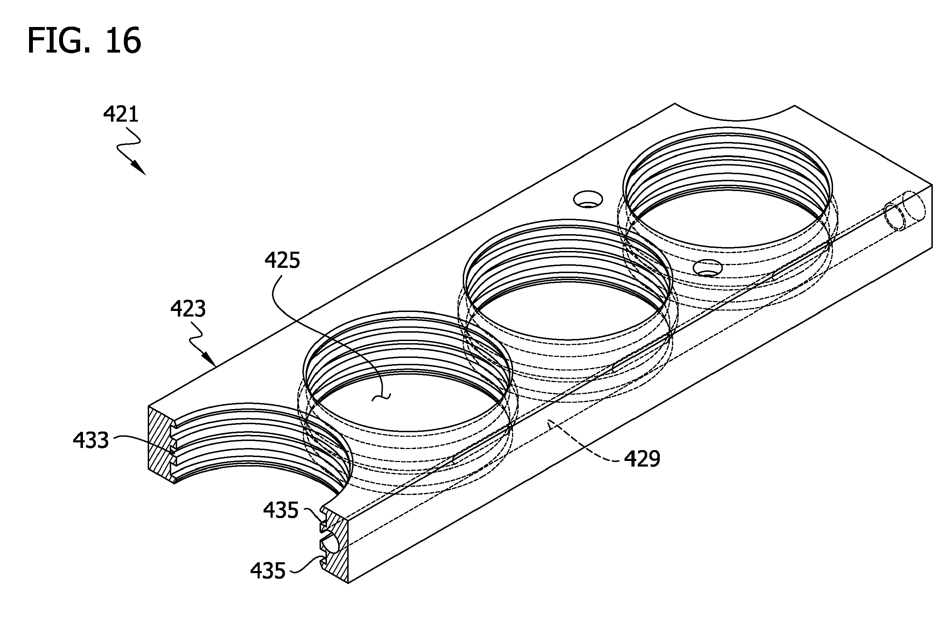

Referring to Figs. 15, 16 and 18 the inlet(s) 411 and outlet(s) 413 of each thermal jacket 403 are suitably connected to a common supply manifold 421 and exhaust manifold 441, respectively. The cooling fluid supply manifold 421 of the illustrated embodiment includes a plate 423 having openings 425 in which the reactors 103 are received. One or more coolant supply conduits extend through the plate 423 and pass alongside each reactor 103 that is received in one of the openings 425. For example, as illustrated in Fig. 16, a single coolant supply conduit 429 extends longitudinally along a side edge of the plate 423 adjacent each reactor 103 in the row of the 1 x 8 reactor array. The number and configuration of openings 425 and conduits 4229 in the plate 423 can vary within the scope of the invention. For example, the openings in the manifold plate and/or the one or more coolant supply conduits can be arranged differently to provide cooling gas to an array of reactors having a configuration different than the array of the illustrated embodiment. A fitting 431 (Fig. 15) is provided at one end of the plate 423 for connecting the conduit 429 to a line 457 to a supply of cooling fluid 451 (Fig. 19). As illustrated in Fig. 19, the line 457 is suitably connected to a cooling fluid circuit including a source of liquid nitrogen 451, a heat exchanger 459 for chilling a fluid (e.g., from a line 463 connected to house nitrogen), and valves 461 for switching between chilled fluid and un-chilled fluid.

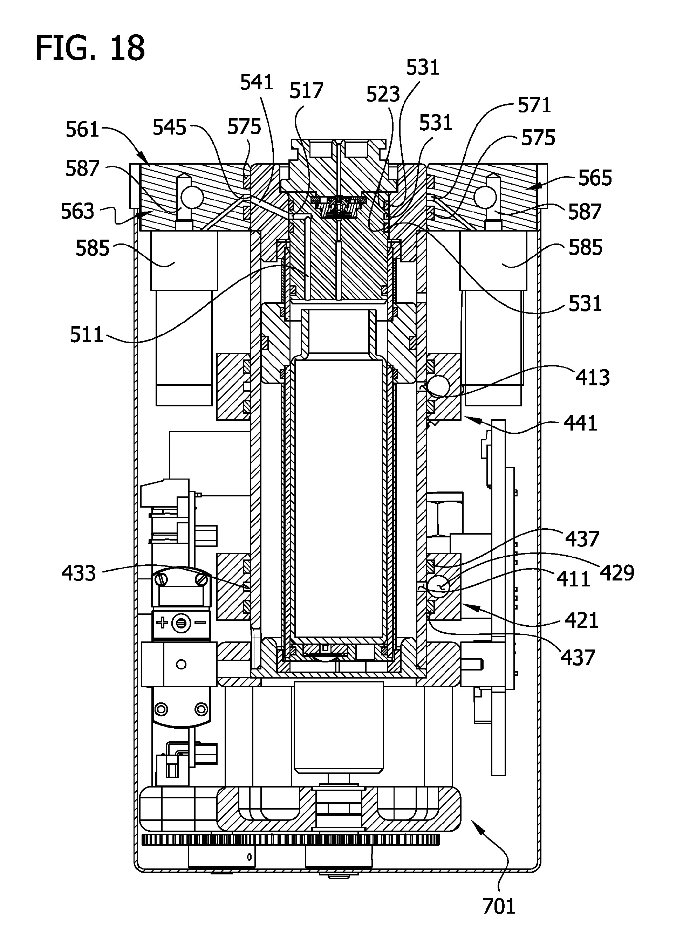

As illustrated in Fig. 16, each of the openings 425 in the plate 423 has an inwardly facing annular channel 433 aligned axially along the reactor and in fluid communication with the inlet 411 of the cooling jacket 403, which in the illustrated embodiment is an opening through the insulated wall 405 of the cooling jacket. This channel 433 is also in fluid communication with the coolant supply conduit 429 in the manifold plate. For example, the coolant supply conduit 429 in the illustrated embodiment is positioned relatively close to the openings 425 and the central channels 433 are constructed to extend radially outward from the openings into the body of the plate 423 to the conduit, as best illustrated in Fig. 16. Each channel 433 is between two other inward facing channels 435, in which O-rings 437 (e.g., FEP encapsulated silicon O-rings or the like) are seated to form seals between the plate 423 and the outer surface of the reactor 103 as illustrated in Fig. 18. Thus, a cooling fluid can flow from the conduit 429 into the channel 433 circumferentially around the outer surface of the reactor 103 (e.g., the outer surface of the cooling jacket 403) to the inlet 411. Because the annular channel 433 extends all the way around the circumference of the reactor 103, the inlet 411 communicates with the channel regardless of the rotational orientation of the reactor relative to the manifold plate 423. Although the channel 433 in the illustrated embodiment extends all the way around the reactor 103, it is understood that a similar channel may extend only part of the way around the reactor and still provide substantial tolerance for various different rotational positions of the reactor 103 relative to the manifold plate 423 without disrupting fluid communication between the manifold plate and the cooling jacket 403.

The exhaust manifold 441 of the cooling system 401 in the illustrated embodiment is substantially identical to the supply manifold 421 except that it is axially aligned with the one or more outlets 413 instead of the one or more inlets 411 and is connected to a line 465 to an exhuast. Thus, it is not necessary to describe the exhaust manifold 441 of the cooling system 401 separately. It is understood, however, that the supply and exhaust manifolds may differ from one another within the scope of the invention. It is also understood that other manifolds and systems other than manifolds (e.g., a plurality of fluid lines plumbed to the reactors) can be used to supply cooling fluid to the cooling jackets and exhaust the cooling fluid therefrom within the scope of the invention. It is also contemplated that a cooling fluid can be added to a cooling jacket to cool one or more reactors robotically or manually (e.g., using a syringe) to quickly cool reaction materials.

As noted previously, the reactor head assembly 201 allows addition and/or withdrawal of one or more materials from the reactor 103 via a cannula passage 211 extending through the head assembly. The system 101 also includes a fluid transport system 501 for supplying each of the reactors with one or more fluids (e.g., gaseous reaction materials or inert gases) during the course of a reaction. The fluid transport system 501 (Fig. 15) is suitably operable to supply fluid to the reactors 103 while maintaining the pressure of the reactors at a pressure that is different from the ambient pressure (e.g., in the range of about 100 mTorr to about 500 psi). The fluid transport system 501 is suitably operable to pressurize each of the reactors 103 individually. If desired, the reactors 103 can be pressurized to different pressures by the fluid transport system 501.

The fluid transport system 501 is suitably also operable to vent effluent from the headspace 145 of each reactor during a reaction. Effluent vented from the internal volume 143 of the reactors 103 can be directed to an effluent sink 551 or if desired delivered to an analytic instrument (not shown), such as a gas chromatograph, liquid chromatorgraph, mass spectrometer, etc., for example, that is operable to analyze the reactor effluent to assess one or more characteristics of the reactions being conducted in the reactors. The fluid transport system 501 suitably allows each reactor 103 to be vented independently from the other reactors. The fluid transport system 501 can suitably be operated to deliver effluent from each reactor 103 in series to the analytic instrument for analysis. Further, the pressure in one or more reactors 103 can be reduced by venting effluent through the fluid transport system without reducing the pressure in one or more other reactors.

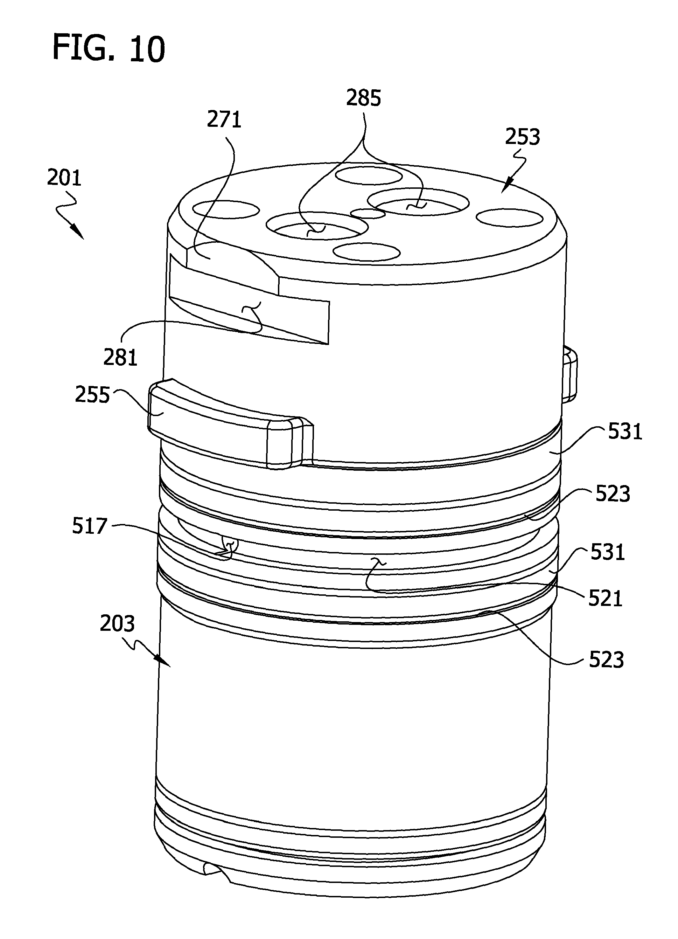

As best illustrated in Fig. 4, the reactor head 203 suitably has a conduit or passage 513 providing fluid communication between the reactor headspace 145 and the fluid transport system 501. The conduit 513 in this embodiment has a L-shaped configuration and includes an axially extending segment 513 that extends from the headspace 145 into the head 203 and a radially extending segment 515 that extends from the axially extending segment to a port 517 (Fig. 10) on the outer surface of the head. The port 517 is positioned above the sidewall assembly 151. Accordingly, the port 517 is positioned above the upper sidewall 165 and upper sidewall heater 167 of the illustrated embodiment. As illustrated in Fig. 10, the head 203 suitably has an annular outward facing channel 521 on its outer surface and positioned axially between two other annular outwardly facing channels 523. The port 517 on the outer surface of the reactor head is axially aligned with the central channel 521 so the port is in fluid communication with the central channel. For example, port 517 is suitably at the bottom of the channel 521, as illustrated in Fig. 10. O-rings 531 are seated in the upper and lower channels 523 and form seals between the head 203 and the reactor manifold cap 261, as illustrated in Fig. 18, to keep fluid confined axially in the central channel.

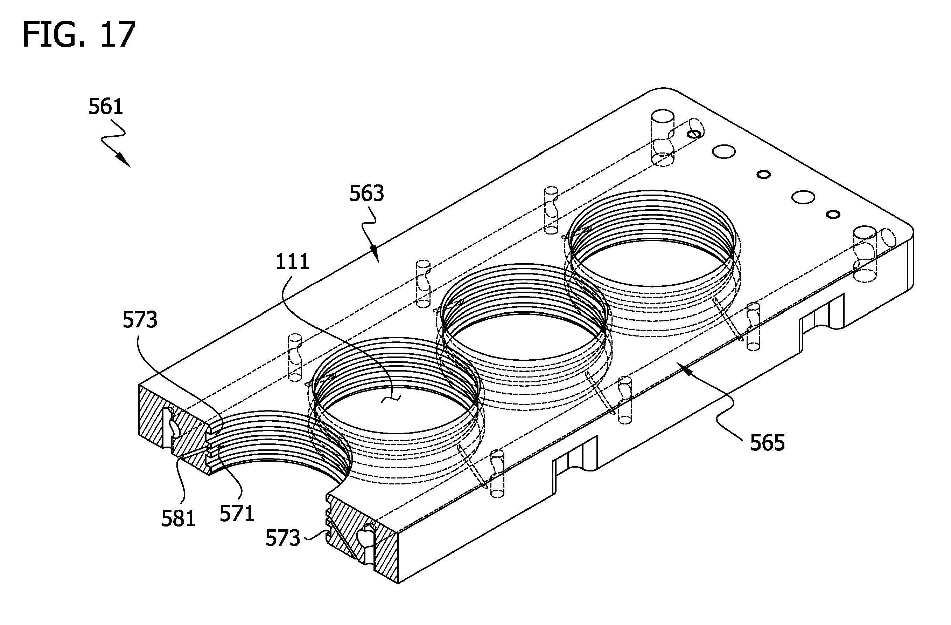

Another conduit 541 (Figs. 14 and 18) extends through the reactor manifold cap 261 from a port 543 on the inner surface of the manifold cap 261 that is axially aligned with the central channel 521 on the outer surface of the reactor head to a port 545 on the outer surface of the manifold cap. The port 545 on the outer surface of the manifold cap is in fluid communication with passages in a manifold plate 561 (Figs. 17 and 18) forming the upper part of the housing 105.

As is best understood in reference to Figs. 17 and 18, the fluid transport system 501 suitably comprises two separate manifolds associated with the manifold plate 561. For example, one manifold 563 can be used to add one or more fluids to the reactors 103 and the other manifold 565 can be used to remove one or more fluids from the reactors. The manifolds 563, 565 suitably extend along opposite sides of the reactors 103 and can be substantially mirror images of each other, as illustrated in Fig. 17. Thus, the detailed description of one of the manifolds 563 is sufficient to describe the other 565. However, it is understand that the manifolds may include substantial differences from one another within the scope of the invention.

The reactor openings 111 in the housing 105 extend through the manifold plate 561, as illustrated in Fig. 17. The inner surface of each such opening 111 is formed with an inwardly facing fluid distribution channel 571 and O-ring channels 573 for containing O-rings 575 (Fig. 18) that form seals between the manifold plate 561 and manifold cap 261 to confine fluid axially within the distribution channel. The outer port 545 of the manifold cap 261 is axially aligned with and in fluid communication with the fluid distribution channel 571. A conduit 581 extends from the fluid distribution channel 571 at an angle through the manifold plate 561 to a flow control device 585 (e.g., a solenoid valve) mounted adjacent the lower surface of the manifold plate 561 inside the housing 105 (Fig. 18). A T-connection 587 (FIG. 18) connects each valve 585 to a main conduit 589 of the fluid transport system 501 so the valve is operable to selectively block or permit flow of fluid between the respective reactor 103 and the main conduit. Each valve 585 is suitably controlled independently of the other valves (e.g., by the processor 191) so fluid can be fed to and/or vented from each reactor to the respective manifold 563, 565 independently from the other reactors. As illustrated in Fig. 19, the main conduit 589 is suitably connected by a line 591 to a supply of process gas 593 or quench gas 595 (for example) in the case of the feed manifold 563 or a line 597 to an effluent sink (e.g., a partial vacuum source) or an analytic instrument in the case of the effluent manifold 565.

The various annular fluid distribution channels 521, 571 of the fluid transport system 501 operate to permit tolerance for variations in the rotational orientation of the various parts of the reactor 103 in a manner that is substantially analogous to the way the annular channels 433 of the cooling system operate. These channels 521, 571, 433 substantially eliminate to the need to worry about rotational alignment of the various parts of the reactors 103. As long as there is substantial alignment in the axial direction, changes in the rotational orientation of the reactor and/or its various components will not disrupt operation of the cooling system 401 or fluid transport system 501.

It is understood that any of the inward facing channels could be combined with and/or replaced by outwardly facing channels (and vice-versa) within the scope of the invention. Further, it is contemplated that the reactor system 101 can be adapted to use substantially different fluid transport systems within the scope of the invention. For example, the number and configuration of conduits in the manifolds 563, 565 can vary within the scope of the invention. For example, the openings in the manifold plate 561 and/or the one or more conduits can be arranged differently to accommodate an array of reactors having a configuration different from the array of the illustrated embodiment. It is also understood that other manifolds and systems other than manifolds (e.g., a plurality of hoses or other conduits) can be used to feed fluids to the reactors and/or vent the reactors.

The reactor system 101 suitably includes a stirring system 701 operable to stir reaction mixtures in the reactors 103. As illustrated in Figs. 15 and 20, the stirring system 701 is a magnetic stirring system including pot magnets 703 positioned under each reactor 103. Each magnet 703 is connected by a spindle 705 to a gear 707 in a gear train 709 driven by a motor 711 in the housing 105. When the magnets 703 are rotated by the motor 711 magnetic stir bars (not shown) in the reactors are rotated by the rotating magnetic fields and can thereby stir the reaction materials. Other stirring systems can be substituted for the stirring system 701 illustrated in Figs. 15 and 20 without departing from the scope of the invention. The stirring system can also be omitted if stirring is not needed for a particular application.

To operate the reactor system 101, a relatively small amount of reaction materials (e.g., no more than about 150 milliliters for each reactor) is loaded into the internal spaces 143 of the reactors 103. The reaction materials suitably have a relatively high thermal mass relative to the sidewall assembly 151 and lower sidewall 161. For example, the ratio of the thermal mass of the lower sidewall 161 to the thermal mass of the reaction materials is suitably in the range of about 0.1 to about 10 and more suitably in the range of about 0.3 to about 3. The ratio of the thermal mass of the sidewall assembly 161 to the thermal mass of the reaction materials is suitably in the range of about 0.15 to about 15, and more suitably in the range of about 0.5 to about 5.

After the reaction materials are in the reactors 103, the head assemblies 201 are latched to the manifold cap 261 using the latching system 251 to enclose the reaction materials in the reactors. The fluid transport system is suitably used to pressurize the reactors 103 (e.g., with a process or inert gas). Because each reactor 103 has its own set of valves 585 they can be pressurized to different pressures. The valves 585 can suitably all be closed to seal each reactor 103 if that is desired. However, the independent operation of the valves provides the option to feed fluid (e.g., a reactant, an inert gas, or a quenching fluid) to any one or more reactors in parallel (continuously or intermittently) or in series one after the other.

The reaction materials are heated by the lower sidewall heater 163. Desirably, the reaction materials can be heated rapidly, e.g., at a ramp rate that is suitably at least about 5 degrees C per minute, and more suitably in the range of about 5 degrees C per minute to about 25 degrees C per minute, still more suitably in the range of about 10 degrees C per minute to about 25 degrees per minute, still more suitably in the range of about 15-25 degrees C per minute, and still more suitably up to about 100 degrees C per minute.

While the reaction materials are heated, the cooling system 401 suitably pumps cooling fluid through the cooling jackets 403 of the reactors. The rate of cooling fluid flow through the cooling jackets 403 is suitably relatively high. For example, the cooling system suitably pumps in the range of about 0.15 to about 5 scfm of cooling gas (e.g., chilled nitrogen) to each cooling jacket 403. The cooling fluid suitably contacts the heaters 163 directly in the cooling jacket. Because of their relatively high power and because they heat the reaction materials from multiple radial directions, the heaters 163 are able to heat the reaction materials rapidly in spite of cooling by the cooling system. Further, because the cooling system 401 contacts the relatively low thermal mass sidewall assembly 151 directly with the cooling fluid, the system 101 can quickly cool the reaction materials. For example, if an exotherm in one of the reactors 103 causes the temperature of the reaction materials to exceed the intended temperature, the power to the heater can be reduced (e.g., by the processor 191) to allow the cooling system 401 to rapidly cool the reaction materials to the intended temperature. The power consumed by the heater 163 can also be monitored to determine a rate of conversion for the reaction. If desired for certain reactions involving gas phase reaction materials, the power consumed by the heater 163 and the gas uptake can be monitored to provide two separate indicators of conversion of the reaction.

When the heater 163 is off, the cooling system 401 is suitably able to cool the reaction materials at a rate of at least about 5 degrees C per minute and more suitably in the range of about 5 degrees C per minute to about 25 degrees C per minute, still more suitably in the range of about 10 degrees C per minute to about 25 degrees per minute, still more suitably in the range of about 15-25 degrees C per minute, and still more suitably up to about 100 degrees C per minute.

At any time during operation of the reactor system 101, the upper sidewall heaters 167 can be operated independently of the lower sidewall heaters 163 to control a temperature of the head space for one or more reactors 103 to have a temperature that is different than a temperature of the reaction materials in the respective reactor. For example, in some applications it may be desirable to operate the upper sidewall heaters 167 to heat the headspace 145 to a temperature that is higher than the temperature of the reaction materials to minimize condensation on the reactor head 203. In other applications, particularly those in which the reaction materials are heated to a temperature that is above the temperature that can be withstood by the valve assembly 215, it may be desirable to operate the upper sidewall heater 167 at lower power (or leave it off) to maintain the temperature of the reactor head 203 at a lower temperature than the reaction materials. In either case, the thermal barrier helps maintain the difference in temperature between upper and lower portions of the reactor by limiting conductive heat transfer between the upper and lower sidewalls 161, 165.

The temperature sensor 801 and pressure sensor 321 are suitably used to monitor the temperature of the reaction materials and the pressure inside the reactor 103 while reactions are conducted in the reactor system 101. The temperature sensor 801 suitably measures the temperature of an external surface of the lower sidewall 161 or lower sidewall heater 163 to avoid the need for a temperature sensor in the internal space 143 of the reactor 103. Because the temperature sensor is positioned in axial alignment with the reaction materials and because of the relatively low thermal mass of the sidewall assembly 151 (particularly, the lower sidewall 161) the temperature measured by the sensor 801 corresponds well with the actual temperature of the reaction materials. As the pressure in the reactor 103 changes the thin-walled section 327 in the bottom cap 303 will flex and strain. These pressure induced variations in the strain of the thin-walled section 327 are detected by the strain gauge 321.

It may be desirable in some cases to use the temperature sensor 801 in combination with another temperature sensor (not shown) positioned in direct contact with the reaction materials. For example, the data from a temperature sensor (e.g., thermocouple) positioned in the reaction materials can be used by the processor 191 to control operation of the lower sidewall heater 163 and cooling system 401 to match the temperature of the lower sidewall 161 to the temperature of the reaction materials in order to operate the reactor under substantially adiabatic conditions. It will be appreciated that the thermal response time of the sidewall assembly 151, including the thermal response of the lower sidewall 161, can be relatively quick. This is in part because of the relatively low thermal mass of the sidewall assembly 151 (and lower sidewall 161). This is also in part because the lower sidewall heater 163 and cooling jacket 403 substantially surround the reactor and heat and cool surround the reactor, respectively, from multiple radial directions.

If the temperature or pressure in one or more the reactors 103 is too high for the particular experiment (or for safety reasons), the processor 191 suitably causes the corresponding valve 585 to open to vent the reactor, thereby reducing pressure and temperature in the reactor. The gas uptake of the reactor can be monitored if desired to assess conversion of the reaction. The processor 191 can also operate the valves 585 to supply a partial vacuum to any one or more of the reactors 103 to lower pressure in the reactor according to an experimental protocol that calls for a reduction in pressure during a reaction. Likewise, the processor 191 can suitably operate the valves 585 to send effluent from one or more of the reactors 103 in series to an analytical instrument.

Because the reactor system 101 provides flexibility to subject the reaction materials to a wide range of process conditions, it is feasible to conduct many different types of reactions in the reactor system. For example, the reaction system 101 is suitable for conducting one or more reactions in the following non-limiting list of reactions polymerization reactions, condensation reactions, hydrogenation reactions, reduction reactions (including but not limited to those involving hydrogen), oxidation reactions (including but not limited to those involving oxygen, air or the like), hydrolysis reactions and organic or inorganic synthesis reactions. Reactions may be mono- or multi-phasic, homogeneous or heterogeneous, catalytic or stoichiometric in nature.

Many variations are contemplated as being feasible for some applications and within the scope of the invention. Some non-limiting examples of other embodiments will be discussed to illustrate the breadth of the invention.

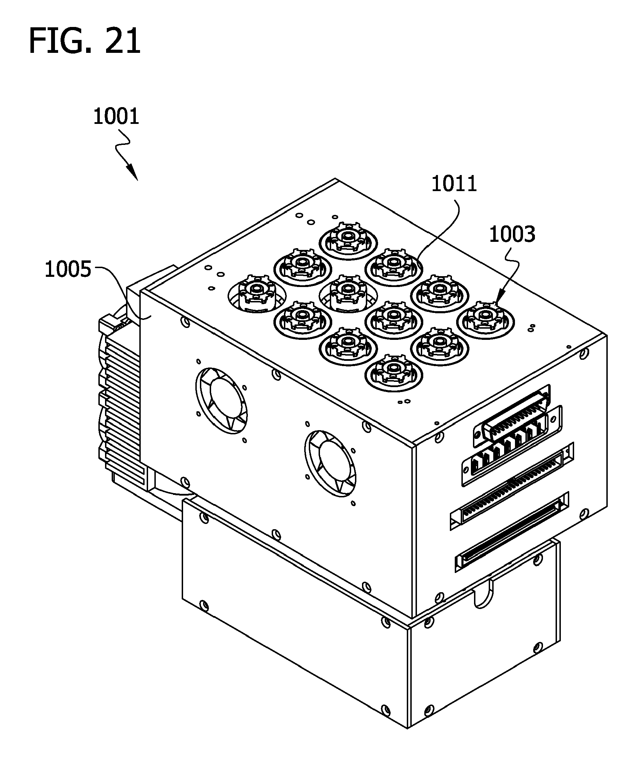

Another embodiment of reactor system 1001 is illustrated in Fig. 21. This system 1001 has a housing 1005 with openings 1011 configured to receive a 3 x 4 array of reactors 1003. The reactors suitably have sidewall assemblies and cooling jackets that are substantially similar to the sidewall assemblies 151 and cooling jackets 403 described above. However, the cooling system does not use manifold plates. Instead, individual fluid lines are connected to the inlets and outlets of the cooling jackets.

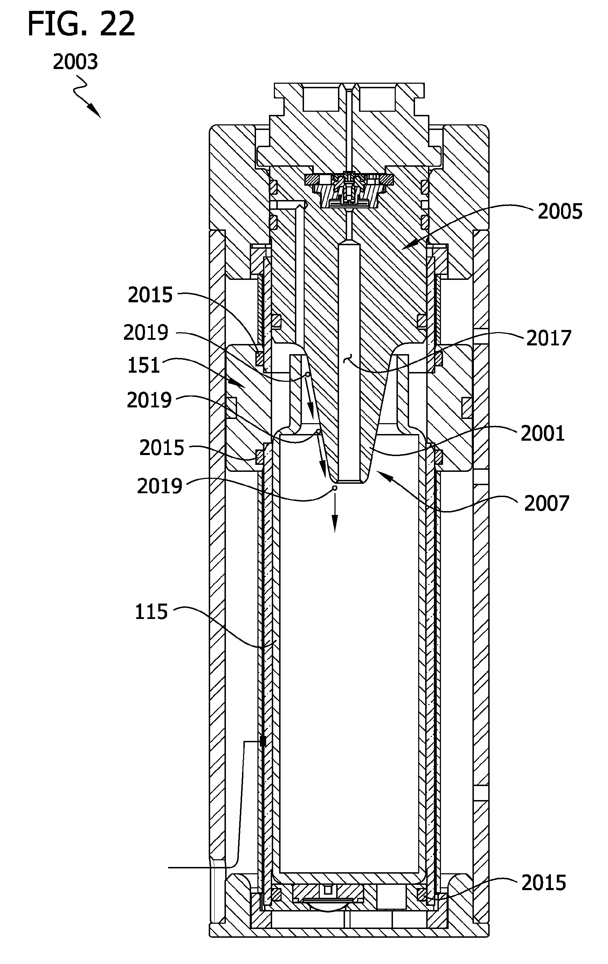

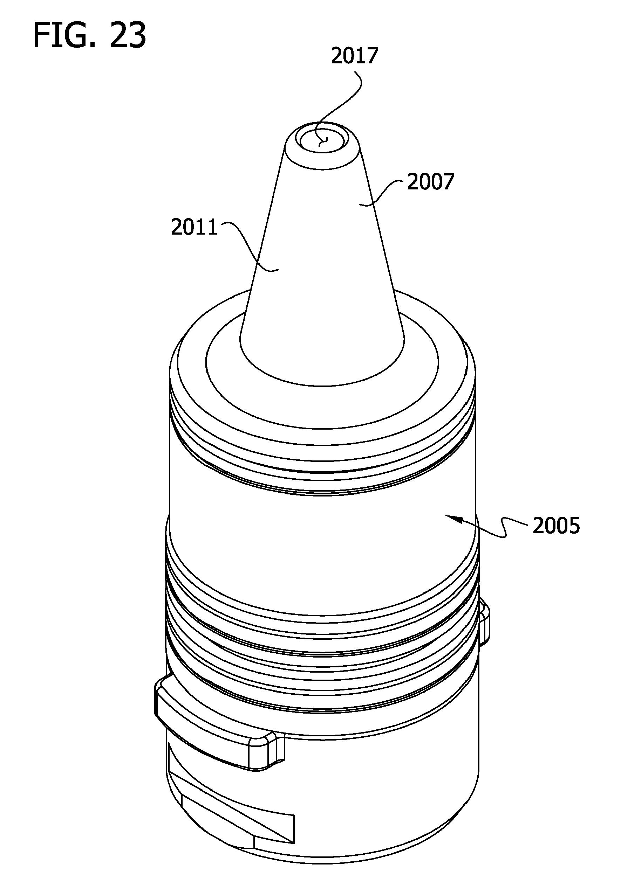

Figures 22 and 23 illustrate another embodiment of a reactor 2003 of the present invention. The reactor 2003 is substantially the same as the reactor 103 described above except as noted. The reactor 2003 is one example of a reactor that is suitably for heating the reaction materials to higher temperatures than the reactor 103 described above. For example, the reactor 2003 is suitable for heating the reaction materials to temperatures in excess of 300 degrees C, although it can also be operated at less extreme temperatures in substantially the same way as the reactor 103 described above. One difference is that the reactor 2005 is made of materials that can withstand the higher temperature. For example, some or all of the o-ring seals are replaced with brazed joints 2015. The heaters 163, 167 are suitably Nichrome heaters. The reactor head 2005 has a cold finger 2007 shaped to transport condensation that forms on the head away from the sidewall assembly 151. For example, the cold finger 2007 suitably includes an inverted frusto-conical protrustion 2011 extending down from the head 2005 into the reaction vessel 115. The protrusion 2011 has a central opening 2017 aligned with the cannula passage 211 to permit the cannula to access the internal space 143 of the reactor. When this reactor is operated at high temperature, the heaters 163, 167 are suitably operated so the temperature of the head 2005 is maintained at a lower temperature than the temperature of the reaction materials. Any condensation 2019 that forms on the lower temperature head 2005 suitably flows along the surface of the protrusion 2011 away from the sidewall 161 and falls into the reaction vessel 115 from the tip of the protrusion. The is desirable when the reaction materials include corrosive or reactive volatile materials because the cold finger 2007 helps limit contact between the corrosive condensate 2019 and the sidewall 161, bottom cap assembly 301 and other parts of the containment structure 141.

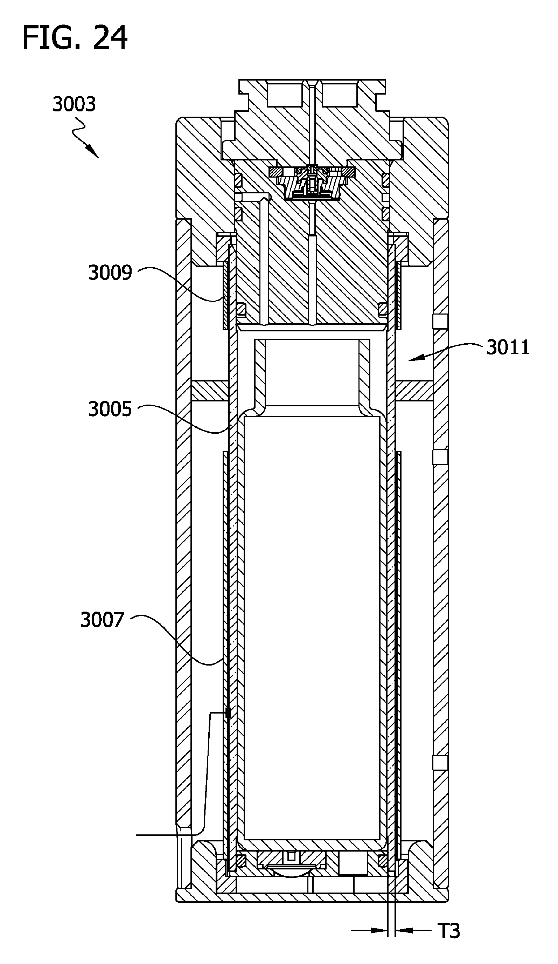

The reactor 3003 illustrated in Fig. 24 is substantially the same as the reactor 103 described above except as noted. This reactor 3003 includes a unitary sidewall 3005 that is substantially similar in construction to the sidewalls 161, 165 described above except that it extends the length of the entire sidewall assembly 3011. The sidewall assembly 3011 includes a head space heater 3009 (generally corresponding to the upper sidewall heater 167 described above) and a reaction material heater 3007 (generally corresponding to the lower sidewall heater 163 described above). The sidewall 3005 is suitably relatively thin. For example, the wall thickness T3 of the sidewall 3005 suitably corresponds to the wall thickness T1 of the sidewall 161 described above. Because the sidewall is thin, it has a limited capacity to conduct heat between the upper and lower portions of the reactor. If desired the sidewall 3005 can be made from a material having a relatively low thermal conductivity (e.g., ceramic) to further reduce conductive heat transfer by the sidewall 3005. For example, the thermal conductivity of the material used to construct the sidewall is suitably in the range of about 1 W/mK to about 20 W/mK.

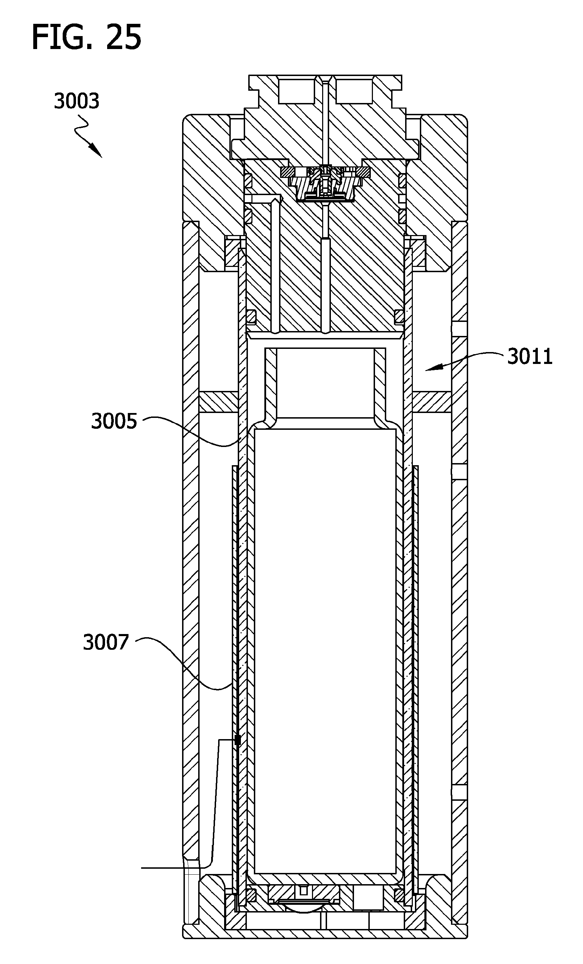

The reactor 4003 illustrated in Fig. 25 is substantially similar to the reactor 3003 illustrated in Fig. 24 except that the head space heater 3009 is omitted in this embodiment.

### Example 1

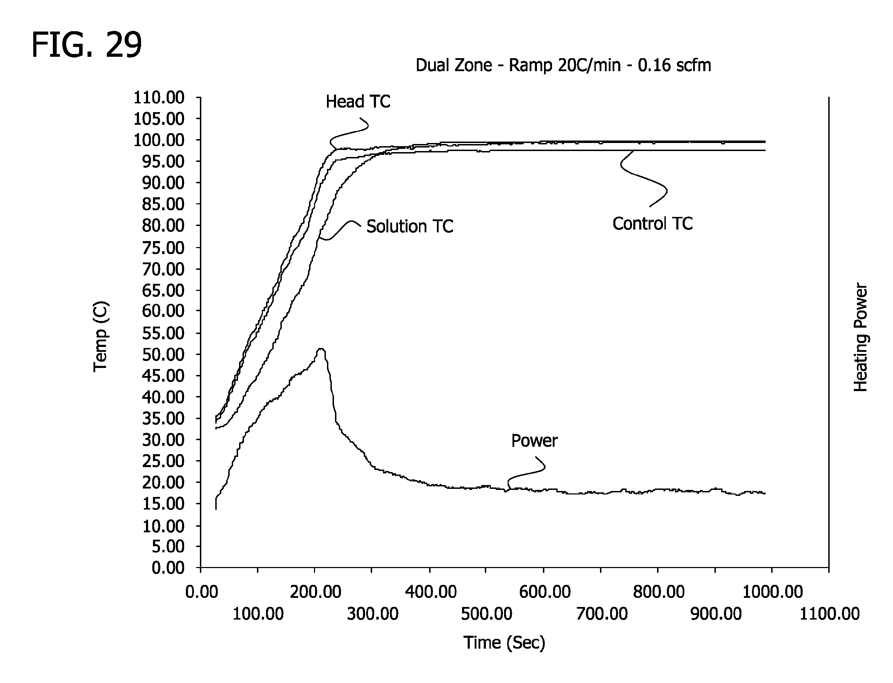

A reactor that has a sidewall assembly 151 substantially similar to the reactor 103 described above and illustrated in Figs. 3-5 was heated by the upper and lower sidewall heaters 163, 167. During heating the cooling system was operated so that cooling gas (e.g., chilled nitrogen) was pumped through the cooling jacket 403. Temperature measurements were taken by a thermocouple 4001 (Fig. 28) positioned to measure the temperature of the reactor head, a thermocouple 4003 positioned to measure a temperature of a solution contained in the reactor, and also a thermocouple 4005 positioned to measure a temperature of the external surface of the containment structure. Figure 29 is a graph showing a plot of the temperature measured by the various thermocouples 4001, 4003, 4005 versus time. The data show that there is a relatively strong correction between the temperature of the containment structure and the temperature of the solution.

### Example 2

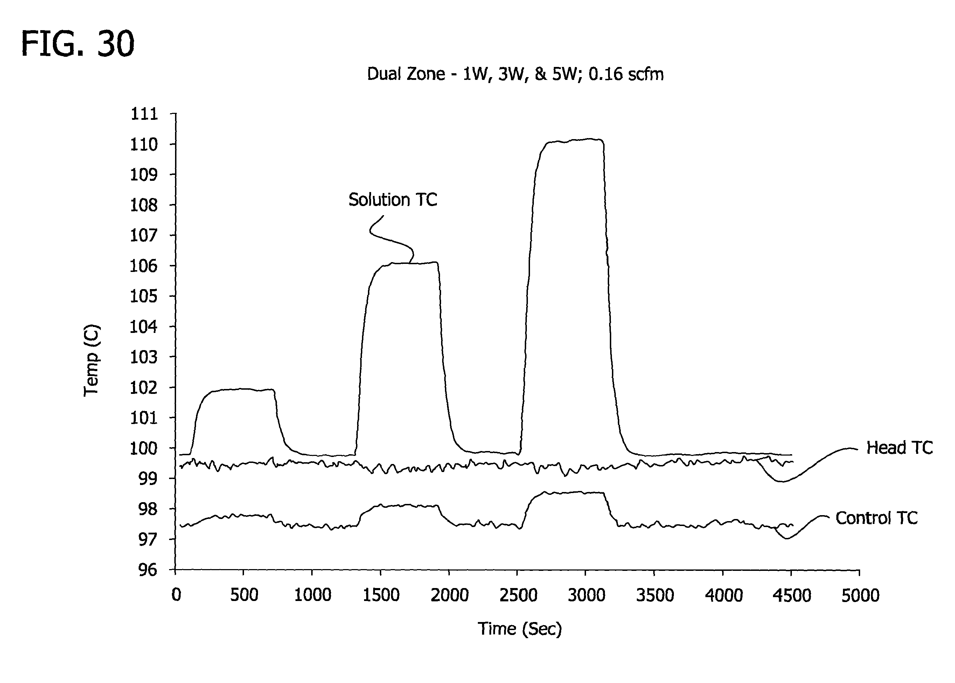

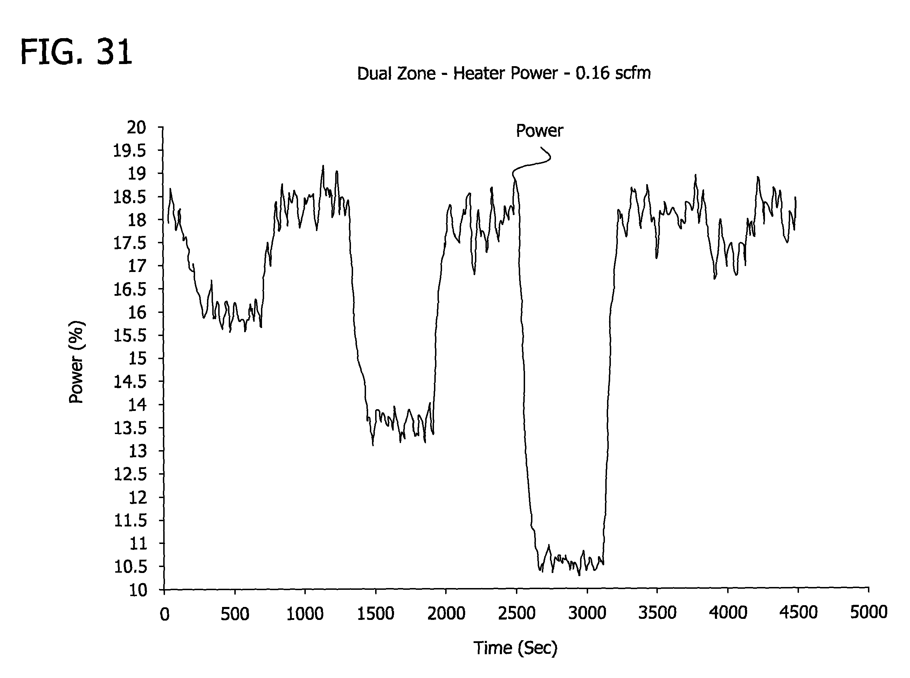

A resistive heating element was placed into the reactor described for Example 1. The upper and lower sidewall heaters 163, 167 were operated to maintain the temperature of the a solution in the reactor at about 100 degrees C while the cooling system was operated to flow a cooling gas (e.g., chilled nitrogen) through the cooling jacket 403. The heating element was turned on so that about 1 W of heat was generated in the solution by the heater. Then the heater was turned off. The process was repeated with the heater operating at about 2 W and also at about 3 W. Figure 30 is a graph showing plots of the temperatures measured by the thermocouples 4001, 4003, 4005 versus time. This graph shows that the temperatures of the solution and lower sidewall increase in response to the heat added by the heater. In contrast, the temperature of the heat does not respond significantly to the heat from the heater in part because of the thermal barrier 171. Figure 31 is a graph showing a plot of the power consumed by the lower sidewall heater 163 versus time. This graph shows that power consumption is a good indicator of the heat that is added to the solution by the heater that is in the solution.

### Example 3

Figure 32 is a graph showing a first plot of temperature measured by a thermocouple 801 in contact with the lower sidewall 161 of a reactor 2003 constructed in accordance with Figs. 22-23, as described above, alongside a second plot of temperature of reaction materials measured by a thermocouple positioned in the reaction materials as indicated in Fig. 28. Figure 32 shows a close correlation between the temperature of the external surface of the sidewall measured by the thermocouple 801 and the actual temperature of the reaction materials.

### Example 4

This example illustrates the thermal response of a reactor constructed in accord with Figs. 3-5 to a simulated exotherm produced by adding a controlled amount of a heated material to a solution in the reactor after it has been equilibrated to a lower temperature. The experiment was performed while the cooling system 401 was operated to flow cooling gas (e.g., chilled nitrogen) through the cooling jacket 403 and also without flow of cooling gas through the cooling jacket. For each reactor, a 74 mm glass tube was equipped with a stir bar and 5 mL of o-xylene was added to the tube. The tube was placed into the reactor and equilibrated at 50 °C. The lower sidewall heater 163 was operated to maintain the temperature of the solution at about 50 degrees C. A 9 inch glass pipette was warmed by repeatedly flushing it with o-xylene at 133 °C. This pipette was used to rapidly inject 2 mL of 133 °C o-xylene into the reactor as an addition to the 5mL 50 °C solution. The internal temperature was measured by the thermocouple 4003 inside the solution and recorded, while the reactor wall temperature was measured by the thermocouple 4005. Figure 33 is a graph showing plots of temperatures recorded by the thermocouples 4003, 4005 versus time. Figure 33 also includes a plot of the heater power versus time.

Without the cooling system, a temperature increase of 11.7 °C was measured in the solution of the reactor of the present invention and this translated to a 2.6 °C temperature increase at the wall of the reactor. When the cooling gas was used, a temperature difference of similar magnitude (12.9 °C) was observed in the solution and a temperature difference of 2.0 °C (from 50.3 °C to 52.3 °C) was observed at the wall of the reactor. The simulated exotherms for the various reactors were observed by the drop in heater power to compensate for the increase in temperature inside the reactor. The power consumption by the heater was higher when the cooling system was operating, but the drop in heater power in response to the simulated exotherm is similar to what occurred without the cooling system.

### Example 5

Solvents loss experiments were conducted to compare solvent loss in reactors having a cold finger as illustrated in Figs. 22 and 23. A 40 mL-vial (total volume of reactor cell - 58 - 67 cm³; reactor made of aluminum to fit 40 mL vials; thermal mass - 40.2 J/K; thermal mass/volume - 0.59 (J/K)/cm³) was charged with toluene (20.0 - 29.5 g) and place into the reactor. The reactors were closed, pressurized with argon and heated. The reactor was verified not to have leaks before continuing with the experiments. Two different temperatures were set on the lower sidewall heater 163 and the upper sidewall heater 167 for the reactors. After the specific time the reactor was allowed to cool down to room temperature. The vial was weighed to get the solvent recovery. Final data are displayed on the following table:

| Reactor^{a} | Solvent Amount (g) | Press. (psi) | Lower sidewall heater (°C) | Upper sidewall heater (°C) | Time (hrs) | Recovered Solvent (g) | Solvent loss (%) |
|---|---|---|---|---|---|---|---|
| HT-S-C^{b} | 29.5 | 100 | 150 | 40 | 18 | 29.2 | 1.0 |
| HT-S-C^{b} | 29.2 | 25 | 150 | 40 | 2 | 29.1 | 0.4 |

The data indicate that a substantial amount of solvent was recovered in the reactors that had a cold finger. When similar experiments are run with reactors that do not have a cold finger there is substantially more solvent loss due to condensation that is not refluxed back into the reactor vessel. For example, even when the headspace of a reactor lacking a cold finger is heated above the temperature of the lower portion of the reactor, solvent losses in the range of 6-32 percent have been experienced.

### Example 6

The experiment was performed to demonstrate use of a reactor constructed in accord with the embodiment illustrated in Figs. 22-23 for nanoparticle synthesis. Cadmium selenide (CdSe) nanoparticles have been made from the reaction between TOPSe and a solution of already prepared cadmium octadecylphosphonate (Cd-ODPA) in TOPO. A solid stock solution of Cd-ODPA in TOPO (15 g) was weighed into a 40 mL vial. The contents of each reactor were heated from 44 to 325 °C at a ramp rate of 30 °C/min. Once the reactor equilibrated at the desired temperature (325 °C), TOPSe (1.1 mL) was added to the reactor to initiate the nanoparticle synthesis reaction. While one reactor in the housing is heated to or equilibrated at 325 °C, the neighboring reactor can be maintained at a temperature under 45 °C. Aliquots of 100 uL were taken from the reactor at pre-determined time intervals and dispensed into pre-tared, capped 2 mL vials contained in a 48-well microtiter plate. After the reaction time was completed (15-20 minutes), the cooling system was initiated to begin cooling the reactor. The reactor was cooled from 325 °C to 100 °C at a rate of 28 °C/min, then allowed to continue cooling more slowly. Acetone was added to the reaction vessel during the cooling process (at approximately 75 °C). The nanoparticles were then cleaned by washing with acetone, centrifugation, and removal of supernatant. The nanoparticles were further cleaned by dissolution in chloroform, followed by addition of octylamine, then addition of acetone. They were again isolated by centrifugation and removal of supernatant. UV/Vis fluorescence and absorption obtained of aliquots from the reaction and of the final product of the CdSe synthesis reaction demonstrate the evolution of CdSe quantum dot growth over the span of the reaction time. All fluorescence full width at half maxima (fwhm) are less than 36 nm. XRD peak positions correspond to those of authentic samples of wurzite or zinc blend CdSe. Figure 34 is a graph showing a plot of the temperature of the materials in the reactor (as measured by a thermocouple) versus time.

This example is just one example the wide variety of processes that can be conducted using reactor systems of the present invention. It is understood that other processes can be conducted within the scope of the invention.

When introducing elements of the present invention or the preferred embodiments thereof, the articles "a", "an", "the", and "said" are intended to mean that there are one or more of the elements. The terms "comprising", "including", and "having" are intended to be inclusive and mean that there may be additional elements other than the listed elements.

In view of the above, it will be seen that the several objects of the invention are achieved and other advantageous results attained.

As various changes could be made in the above constructions and methods without departing from the scope of the invention, it is intended that all matter contained in the above description and shown in the accompanying drawings shall be interpreted as illustrative and not in a limiting sense.

### It follows a list of further embodiments of the invention:

Embodiment 1. A reactor system comprising:
   a housing; and
   a plurality of reactors at least partially contained in the housing, the reactors each comprising a containment structure enclosing an internal space in the reactor, the containment structure including a circumferential sidewall having opposite ends and surrounding at least a portion of said internal space, the sidewall having a thermal mass and
   a sidewall heater adjacent an exterior surface of the sidewall,
      wherein a ratio of the thermal mass of the sidewall to a volume of said portion of the internal space that is surrounded by the sidewall is in the range of about 200 kJ/Km³ to about 3000 kJ/Km³.
Embodiment 2. A reactor system with the features of embodiment 1 wherein the sidewall heater has a thermal mass in the range of about 15 J/K to about 40 J/K.
Embodiment 3. A reactor with the features of embodiment 2 further comprising a cooling system operable to cool the sidewall heaters and sidewalls of the reactors.
Embodiment 4. A reactor system with the features of embodiment 1 wherein the sidewall heater is operable to heat the sidewall from multiple radial directions.
Embodiment 5. A reactor system with the features of embodiment 1 wherein the sidewall heater is operable to heat the sidewall from substantially every radial direction.
Embodiment 6. A reactor system with the features of embodiment 1 wherein the volume of said portion of the internal space that is surrounded by the sidewall is in the range of about 500 microliters to about 150 milliliters.
Embodiment 7. A reactor system with the features of embodiment 6 wherein the volume of said portion of the internal space that is surrounded by the sidewall is in the range of about 1 milliliter to about 50 milliliters.
Embodiment 8. A reactor system with the features of embodiment 1 wherein the sidewall has an internal diameter and a length, the ratio of the internal diameter to the length being in the range of about 0.25:1 to about 1:1.
Embodiment 9. A reactor system with the features of embodiment 1 further comprising a cooling system operable to cool the sidewall heaters and sidewalls of the reactors.
Embodiment 10. A reactor system with the features of embodiment 9 wherein the cooling system is operable to contact the sidewall heaters with a cooling fluid.
Embodiment 11. A reactor system with the features of embodiment 1 wherein the sidewall heater is in close conformal relation with the sidewall.
Embodiment 12. A reactor system with the features of embodiment 1 wherein the internal space of the reactor includes a reactor head space, at least a portion of the head space being spaced axially from the sidewall heater.
Embodiment 13. A reactor system with the features of embodiment 12 further comprising a headspace heater positioned to heat the reactor head space, the head space heater and sidewall heater being independently controllable.
Embodiment 14. A reactor system with the features of embodiment 1 wherein the internal space of the reactor includes a reactor head space separated from the sidewall heater by a thermal barrier.
Embodiment 15. A reactor system with the features of embodiment 14 further comprising a head space heater positioned to heat the reactor head space, the head space heater and sidewall heater being independently controllable.
Embodiment 16. A reactor system with the features of embodiment 15 wherein the sidewall is a lower sidewall and the containment structure further comprises an upper sidewall.
Embodiment 17. A reactor system with the features of embodiment 16 wherein the containment structure further comprises a thermal barrier separating the upper sidewall and lower sidewall, wherein the thermal barrier has a lower thermal conductivity than the upper and lower sidewalls.
Embodiment 18. A reactor system with the features of embodiment 16, wherein the head space heater is positioned adjacent to an external surface of the upper sidewall.
Embodiment 19. A reactor system with the features of embodiment 18 wherein the head space heater is positioned to heat the upper sidewall from multiple radial directions.
Embodiment 20. A reactor system with the features of embodiment 1 further comprising a vacuum source for applying a partial vacuum to the internal space of one or more of the reactors.
Embodiment 21. A reactor system with the features of embodiment 20 wherein the system is operable to apply a partial vacuum to each reactor independently.
Embodiment 22. A reactor system with the features of embodiment 1 further comprising a thermocouple for each reactor, the thermocouple being positioned to measure the temperature of the sidewall and being positioned outside the internal space of the reactor.
Embodiment 23. A reactor system with the features of embodiment 1 further comprising a thermocouple for each reactor, each thermocouple being positioned to contact reaction materials in the internal space of the respective reactor.
Embodiment 24. A reactor system with the features of embodiment 1 further comprising for each reactor a pressure sensor operable to measure a pressure in the internal space of the reactor, the pressure sensor comprising a strain gauge positioned to measure a pressure induced strain in the containment structure.
Embodiment 25. A reactor system with the features of embodiment 24 wherein the strain gauge is positioned outside the internal space of the reactor.
Embodiment 26. A reactor system with the features of embodiment 1 further comprising a stirring system operable to stir reaction materials in the internal space of the reactor.
Embodiment 27. A reactor system with the features of embodiment 1 wherein the sidewall heater is in direct contact with the exterior surface of the sidewall.
Embodiment 28. A reactor system with the features of embodiment 1 wherein the sidewall comprises a material selected from the group consisting of aluminum, stainless steel, titanium, a nickel-based super alloy, and ceramic.
Embodiment 29. A reactor system with the features of embodiment 1 wherein each reactor comprises a reactor head including a cold finger.
Embodiment 30. A reactor system with the features of embodiment 1 wherein the reactors each have at least one fluid passage extending from a reactor port on an external surface of the reactor to the internal space in the reactor, the system further comprising:
   a fluid transport system operable to transport fluid through the fluid passages of the reactors, the fluid delivery system comprising a manifold, the manifold having at least one manifold port for each reactor and a plurality of manifold passages in fluid communication with the manifold ports,
      wherein at least some of the reactors are moveable relative to the housing between a first axial position in which each such reactor is at least partially received in one of the openings in the housing and the at least one manifold port for each such reactor is in fluid communication with the corresponding reactor port of the reactor regardless of the rotational orientation of the reactor on an axis corresponding to the axial direction and a second axial position relative to the housing in which the at least one manifold port for each such reactor is not in fluid communication with the corresponding reactor port of the reactor.
Embodiment 31. A reactor system comprising:
   a housing; and
   a plurality of reactors at least partially contained in the housing, the reactors each comprising a containment structure enclosing an internal space in the reactor, the containment structure including (a) a lower sidewall surrounding a portion of said internal space; (b) an upper sidewall surrounding another portion of said internal space; and (c) a thermal barrier separating the upper sidewall and the lower sidewall.
Embodiment 32. A reactor system with the features of embodiment 31 wherein each reactor further comprises a lower sidewall heater adjacent an exterior surface of the lower sidewall.
Embodiment 33. A reactor system with the features of embodiment 31 wherein the thermal barrier has a lower thermal conductivity than the upper and lower sidewalls.
Embodiment 34. A reactor system with the features of embodiment 31 wherein each reactor further comprises an upper sidewall heater adjacent an exterior surface of the upper sidewall.
Embodiment 35. A reactor system with the features of embodiment 34 wherein the upper and lower sidewall heaters of each reactor are independently controllable from one another.
Embodiment 36. A reactor system with the features of embodiment 34 wherein the upper and lower sidewall heaters are operable to heat the upper and lower sidewalls, respectively, from multiple different radial directions.
Embodiment 37. A reactor system with the features of embodiment 34 wherein the upper and lower sidewall heaters are operable to heat the upper and lower sidewalls, respectively, from substantially every radial direction.
Embodiment 38. A reactor system with the features of embodiment 31 further comprising a cooling system operable to cool the lower sidewall heater and lower sidewall.
Embodiment 39. A reactor system with the features of embodiment 38 wherein the cooling system is operable to contact the lower sidewall heater of each reactor with a cooling fluid.
Embodiment 40. A reactor system with the features of embodiment 31 wherein the containment structure for each reactor further comprises a reactor head sealing an end of the upper sidewall and comprising a cold finger shaped to transport condensation that forms on the reactor head away from the sidewall assembly.
Embodiment 41. A reactor system comprising:
   a housing; and
   a plurality of reactors at least partially contained in the housing, the reactors each comprising a containment structure enclosing an internal space in the reactor, the containment structure including: (a) a sidewall assembly including a circumferential sidewall having opposite ends and surrounding a portion of said internal space, the sidewall having a thermal mass; (b) a sidewall heater adjacent an exterior surface of the sidewall; and (c) a reactor head at an end of the sidewall assembly, the reactor head having a thermal mass,
      wherein a ratio of the thermal mass of the sidewall assembly to the thermal mass of the reactor head is in the range of about 0.25:1 to about 1:1.
Embodiment 42. A reactor system with the features of embodiment 41 wherein the thermal mass of the reactor head is in the range of about 0.5 J/K to about 150 J/K.
Embodiment 43. A reactor system with the features of embodiment 41 wherein the sidewalls of the containment structures are lower sidewalls, the containment structures of each reactor further comprising:
   (d) an upper sidewall, the reactor head being at an end of the upper sidewall; and
   (e) a thermal barrier separating the upper sidewall and reactor head from the lower sidewall.
Embodiment 44. A reactor system with the features of embodiment 43 further comprising a cooling system operable to cool the lower sidewalls of the reactors.
Embodiment 45. A reactor system with the features of embodiment 43 wherein each reactor further comprises an upper sidewall heater positioned to heat the upper sidewall of the respective reactor, the upper sidewall heater being independently controllable relative to the sidewall heater for the lower sidewall.
Embodiment 46. A reactor system with the features of embodiment 43 wherein the reactor head for each reactor comprises a cold finger shaped to transport condensation that forms on the reactor head away from the sidewall assembly.
Embodiment 47. A reactor system with the features of embodiment 46 wherein at least some of the reactors further include a cannula passage extending through the cold finger between an exterior surface of the reactor and the internal space of the reactor.
Embodiment 48. A reactor system with the features of embodiment 41 further comprising a cooling system operable to cool the sidewalls of the reactors.
Embodiment 49. A reactor system with the features of embodiment 48 wherein the cooling system is operable to contact the sidewall heater with a cooling fluid.
Embodiment 50. A reactor system with the features of embodiment 41 wherein at least some of the reactors further include a cannula passage extending between an exterior surface of the reactor and the internal space of the reactor, and a sealing mechanism in the cannula passage operable to seal the passage against leakage of material through the cannula passage when a cannula is inserted into the reactor through the passage, said sealing mechanism being positioned in the reactor head.
Embodiment 51. A reactor system comprising:
   a housing having a plurality of openings;
   a plurality of reactors each having a substantially cylindrical outer sidewall surrounding an internal space in the reactor and at least one fluid passage extending from a reactor port on an external surface of the reactor to the internal space; and
   a fluid transport system operable to transport fluid through the fluid passages of the reactors, the fluid transport system comprising a manifold, the manifold having at least one manifold port for each reactor and a plurality of manifold passages in fluid communication with the manifold ports,
   wherein at least some of the reactors are moveable relative to the housing between a first axial position in which each such reactor is at least partially received in one of the openings in the housing and the at least one manifold port for each such reactor is in fluid communication with the corresponding reactor port of the reactor regardless of the rotational orientation of the reactor on an axis corresponding to the axial direction and a second axial position relative to the housing in which the at least one manifold port for each such reactor is not in fluid communication with the corresponding reactor port of the reactor.
Embodiment 52. A reactor system with the features of embodiment 51 further comprising a latching system operable to releasably secure the reactors in their first axial position relative to the housing.
Embodiment 53. A reactor system with the features of embodiment 52 wherein the latching system comprises a bayonet latch for each reactor.
Embodiment 54. A reactor system with the features of embodiment 51 wherein the manifold has openings for receiving the reactors when they are in their first axial position, the fluid transport system includes an annular channel for each reactor extending circumferentially around the reactor between the reactor and the manifold when the reactor is in the first axial position, and fluid can flow between the manifold port and the reactor port through the annular channel when the reactor is in the first axial position.
Embodiment 55. A reactor system with the features of embodiment 54 wherein the annular channel for at least one of the reactors comprises an annular channel in an outward facing surface of the reactor.
Embodiment 56. A reactor system with the features of embodiment 54 wherein at least one of the openings in the manifold is defined by an inward facing surface of the manifold and the annular channel for the reactor received in the opening defined by said inward facing surface comprises an annular channel in the inward facing surface.
Embodiment 57. A reactor system comprising:
   a plurality of reactors each having a substantially cylindrical outer sidewall surrounding an internal space in the reactor and at least one fluid passage extending from a reactor port on an external surface of the reactor to the internal space;
   a fluid transport system operable to transport fluid through the fluid passages of the reactors, the fluid delivery system comprising a manifold having a plurality of openings for at least partially receiving the reactors, the manifold having at least one manifold port for each reactor on an inward facing surface of the openings and a plurality of manifold passages in fluid communication with the manifold ports,
   wherein a fluid flow channel extends at least partially around the circumference of each reactor between the outer surface of the reactor and the manifold such that when the reactor is received in the opening the manifold port and reactor port for the respective reactor are in fluid communication via the channel.
Embodiment 58. A reactor system comprising
   a housing;
   a plurality of reactors at least partially contained in the housing, the reactors each comprising:
      (a) a containment structure enclosing an internal space in the reactor; and
      (b) a pressure sensor operable to measure a pressure in the internal space of the reactor, the pressure sensor comprising a strain gauge positioned to measure a pressure induced strain in the containment structure.
Embodiment 59. A reactor system with the features of embodiment 58 wherein the strain gauge is located outside the internal space in the reactor.
Embodiment 60. A reactor system with the features of embodiment 59 wherein the containment structure comprises a substantially tubular sidewall having an end and a cap assembly sealing the end of the sidewall, the strain gauge being positioned on the cap assembly.
Embodiment 61. A reactor system with the features of embodiment 59 wherein the cap assembly is a bottom cap assembly and the sidewall has a channel extending along its inner surface from a first position relatively closer to the cap assembly to a second position relatively farther from the cap assembly for ensuring that use of a reaction vessel in the containment structure will not result in a gas tight seal between the reaction vessel and the sidewall.
Embodiment 62. A reactor system with the features of embodiment 58 wherein each reactor further comprises a thermocouple positioned to measure a temperature of the containment structure, the thermocouple being positioned outside the internal space of the reactor.
Embodiment 63. A reactor system with the features of embodiment 58 wherein each reactor further comprises a thermocouple positioned for contacting reaction materials in the internal space of the reactor.
Embodiment 64. A reactor system with the features of embodiment 58 wherein the containment structure comprises a sidewall and the thermocouple is positioned to measure a temperature of the sidewall.
Embodiment 65. A reactor system with the features of embodiment 64 wherein the sidewall has a thermal mass that is less than about 0.05 kJ/K.
Embodiment 66. A method of conducting reactions in a plurality of reactors at that are at least partially contained in a housing, the reactors each comprising (a) a containment structure enclosing an internal space in the reactor, the containment structure including a circumferential sidewall surrounding at least a portion of said internal space, the sidewall having a thermal mass; and (b) a sidewall heater adjacent an exterior surface of the sidewall, the method comprising for each reactor:
   adding reaction materials to the reactor, the reaction materials having a thermal mass such that a ratio of the thermal mass of the sidewall of the respective reactor to the thermal mass of the reaction materials in the internal space of the reactor is in the range of about 0.1 to about 10.
Embodiment 67. A method with the features of embodiment 66 further comprising heating the reaction materials using the sidewall heaters.
Embodiment 68. A method with the features of embodiment 67 further comprising cooling the sidewall heaters while the reaction materials are being heated by the sidewall heaters.
Embodiment 69. A method with the features of embodiment 66 wherein the adding comprises adding no more than about 150 milliliters of reaction materials to each reactor.
Embodiment 70. A method with the features of embodiment 66 wherein heating the reaction materials comprises heating the reaction materials at a rate of at least about 5 degrees C per minute.
Embodiment 71. A method with the features of embodiment 66 further comprising contacting the sidewall heaters with a cooling fluid.
Embodiment 72. A method with the features of embodiment 71 further comprising contacting the sidewall heaters with a cooling fluid while the heaters are heating the reaction materials.
Embodiment 73. A method with the features of embodiment 71 wherein contacting the sidewall heater with a cooling fluid further comprises cooling the reaction materials at a rate of at least about 5 degrees C per minute.
Embodiment 74. A method with the features of embodiment 66 wherein the reactors each comprise a head space, the method further comprising controlling a temperature of the head space for each reactor to have a temperature that is different than a temperature of the reaction materials in the respective reactor.
Embodiment 75. A method with the features of embodiment 74 further comprising using a head space heater to heat the head space.
Embodiment 76. A method with the features of embodiment 66 further comprising monitoring a pressure induced strain of the containment structure of each reactor to monitor pressure in the internal space of each reactor.
Embodiment 77. A method of conducting reactions in a plurality of reactors at that are at least partially contained in a housing, the reactors each comprising (a) a containment structure enclosing an internal space in the reactor, the containment structure including a circumferential sidewall surrounding at least a portion of said internal space; and (b) a sidewall heater adjacent an exterior surface of the sidewall, the method comprising for each reactor:
   using the sidewall heater to heat the reaction materials and contacting the sidewall heater with a cooling fluid while heating the reaction materials.

## Claims

1. A reactor system comprising:
a housing; and
a plurality of reactors at least partially contained in the housing, the reactors each comprising a containment structure enclosing an internal space in the reactor, the containment structure including a circumferential sidewall having opposite ends and surrounding at least a portion of said internal space, the sidewall having a thermal mass and
a sidewall heater adjacent an exterior surface of the sidewall,
wherein a ratio of the thermal mass of the sidewall to a volume of said portion of the internal space that is surrounded by the sidewall is in the range of about 200 kJ/Km3 to about 3000 kJ/Km3.

2. A reactor system as set forth in claim 1 wherein the sidewall heater is operable to heat the sidewall from multiple radial directions.

3. A reactor system as set forth in claim 1 further comprising a cooling system operable to cool the sidewall heaters and sidewalls of the reactors.

4. A reactor system as set forth in claim 3 wherein the cooling system is operable to contact the sidewall heaters with a cooling fluid.

5. A reactor system as set forth in claim 1 wherein the internal space of the reactor includes a reactor head space and at least a portion of the head space is spaced axially from the sidewall heater, the system further comprising a headspace heater positioned to heat the reactor head space, the head space heater and sidewall heater being independently controllable.

6. A reactor system as set forth in claim 1 wherein the internal space of the reactor includes a reactor head space separated from the sidewall heater by a thermal barrier.

7. A reactor system as set forth in claim 6 further comprising a head space heater positioned to heat the reactor head space, the head space heater and sidewall heater being independently controllable.

8. A reactor system as set forth in claim 1 further comprising a vacuum source for applying a partial vacuum to the internal space of one or more of the reactors.

9. A reactor system as set forth in claim 1 further comprising a thermocouple for each reactor, the thermocouple being positioned to measure the temperature of the sidewall and being positioned outside the internal space of the reactor.

10. A reactor system as set forth in claim 1 further comprising a thermocouple for each reactor, each thermocouple being positioned to contact reaction materials in the internal space of the respective reactor.

11. A reactor system as set forth in claim 1 further comprising for each reactor a pressure sensor operable to measure a pressure in the internal space of the reactor, the pressure sensor comprising a strain gauge positioned to measure a pressure induced strain in the containment structure.

12. A reactor system as set forth in claim 1 further comprising a stirring system operable to stir reaction materials in the internal space of the reactor.

13. A reactor system as set forth in claim 1 wherein the sidewall heater is in direct contact with the exterior surface of the sidewall.

14. A reactor system as set forth in claim 1 wherein each reactor comprises a reactor head including a cold finger.

15. A reactor system as set forth in claim 1 wherein the reactors each have at least one fluid passage extending from a reactor port on an external surface of the reactor to the internal space in the reactor, the system further comprising:
a fluid transport system operable to transport fluid through the fluid passages of the reactors, the fluid delivery system comprising a manifold, the manifold having at least one manifold port for each reactor and a plurality of manifold passages in fluid communication with the manifold ports,
wherein at least some of the reactors are moveable relative to the housing between a first axial position in which each such reactor is at least partially received in one of the openings in the housing and the at least one manifold port for each such reactor is in fluid communication with the corresponding reactor port of the reactor regardless of the rotational orientation of the reactor on an axis corresponding to the axial direction and a second axial position relative to the housing in which the at least one manifold port for each such reactor is not in fluid communication with the corresponding reactor port of the reactor.
